# EUROPÄISCHE PATENTSCHRIFT

(11) **EP 2 933 496 B1**
(45) Veröffentlichungstag und Bekanntmachung des Hinweises auf die Patenterteilung: **21.11.2018**
(21) Anmeldenummer: 15159509.7
(22) Anmeldetag: 17.03.2015
(51) Int. Cl.: F04D 19/04, F16C 32/04, F04D 29/058, B23K 20/06, F16C 35/00

(54) **VAKUUMPUMPE**
VACUUM PUMP
POMPE À VIDE

(30) Priorität: 17.04.2014 DE 102014105581
(43) Veröffentlichungstag der Anmeldung: 21.10.2015
(73) Patentinhaber: Pfeiffer Vacuum GmbH, 35614 Aßlar (DE)
(72) Erfinder: Wirth, Adrian, 35582 Wetzlar (DE); Vorwerk, Peter, 35630 Ehringshausen (DE)
(74) Vertreter: Manitz Finsterwald Patentanwälte PartmbB

(56) Entgegenhaltungen:
- EP-A1- 0 413 851
- EP-A1- 1 830 081
- EP-A2- 1 596 068
- EP-A2- 2 728 194
- DE-A1- 10 022 061
- DE-A1-102007 041 901
- DE-T2- 69 101 162
- DE-U1-202004 010 821
- US-A1- 2011 043 063

## Beschreibung

Die vorliegende Erfindung betrifft eine Vakuumpumpe, insbesondere Turbomolekularpumpe, oder eine Rotationseinheit für eine Vakuumpumpe, insbesondere für eine Turbomolekularpumpe, mit einem Rotor, einem Stator und einem Magnetlager, wobei das Magnetlager einen am Rotor angeordneten rotorseitigen Lagerteil und einen am Stator angeordneten statorseitigen Lagerteil aufweist, wobei der rotorseitige Lagerteil und der statorseitige Lagerteil einander gegenüberliegende Seitenflächen aufweisen, wobei eine gasdichte Kapselung für den rotorseitigen Lagerteil vorgesehen ist, die eine rotorseitige Schutzwand umfasst, die die Seitenfläche des rotorseitigen Lagerteils abdeckt und/oder wobei eine gasdichte Kapselung für den statorseitigen Lagerteil vorgesehen ist, die eine statorseitige Schutzwand umfasst, die die Seitenfläche des statorseitigen Lagerteils abdeckt.

Die Erfindung betrifft ferner ein Verfahren zur Herstellung einer Vakuumpumpe, insbesondere einer Turbomolekularpumpe, oder einer Rotationseinheit für eine Vakuumpumpe, insbesondere für eine Turbomolekularpumpe, mit einem Rotor, einem Stator und einem Magnetlager, wobei das Magnetlager einen am Rotor angeordneten rotorseitigen Lagerteil und einen am Stator angeordneten statorseitigen Lagerteil aufweist, wobei in zusammengebautem Zustand der Vakuumpumpe bzw. der Rotationseinheit der rotorseitige Lagerteil und der statorseitige Lagerteil einander gegenüberliegende Seitenflächen aufweisen, wobei eine gasdichte Kapselung für den rotorseitigen Lagerteil vorgesehen wird, die eine, insbesondere als Hohlzylinder ausgebildete, rotorseitige Schutzwand umfasst, die die Seitenfläche des rotorseitigen Lagerteils abdeckt und/oder wobei eine gasdichte Kapselung für den statorseitigen Lagerteil vorgesehen wird, die eine, insbesondere als Hohlzylinder ausgebildete, statorseitige Schutzwand umfasst, die die Seitenfläche des statorseitigen Lagerteils abdeckt.

Vakuumpumpen und insbesondere Turbomolekularpumpen, die zur Erzeugung eines hochreinen Vakuums eingesetzt werden, umfassen üblicherweise eine Rotationseinheit mit einem Stator und mit einem Rotor, der gegenüber dem Stator drehend angetrieben wird. Insbesondere bei Turbomolekularpumpen zur Erzeugung eines hochreinen Vakuums wird der Rotor dabei typischerweise mit sehr hohen Drehzahlen drehend angetrieben.

Bei aus dem Stand der Technik bekannten Turbomolekularpumpen kann die Rotationseinheit mehrere Pumpstufen umfassen. Dabei sind als Pumpstufen normalerweise wenigstens eine turbomolekulare Pumpstufe und wenigstens eine der turbomolekularen Pumpstufe nachgeordnete Pumpstufe vorgesehen. Bei der nachgeordneten Pumpstufe kann es sich zum Beispiel um eine Holweck-Pumpstufe oder eine Seitenkanal-Pumpstufe handeln. Die nachgeordnete Pumpstufe kann im Vergleich zur turbomolekularen Pumpstufe gegen höhere Drücke ausstoßen. Dadurch kann eine schwächere Vorvakuumpumpe eingesetzt werden.

Zur drehbaren Lagerung des Rotors gegenüber dem Stator werden üblicherweise zwei Lager verwendet, die ein auf der Hochvakuumseite, das heißt im Bereich des Pumpeneinlasses der Pumpe, angeordnetes Lager und ein weiteres, vorvakuumseitiges, d.h. im Bereich des Pumpenauslasses angeordnetes, Lager umfassen. Das im Bereich der Hochvakuumseite vorgesehene Lager steht mit dem zu evakuierenden Volumen in Verbindung, so dass dieses Lager verschmutzungsfrei ausgeführt sein muss, um eine Verschmutzung des zu evakuierenden Volumens bzw. der darin enthaltenen Medien möglichst vollständig zu vermeiden.

Das an der Hochvakuumseite vorgesehene Lager wird deshalb häufig als Magnetlager und insbesondere als Permanentmagnetlager ausgeführt, welches einen rotorseitigen Lagerteil und einen statorseitigen Lagerteil umfasst, die jeweils durch einen rotorseitigen bzw. statorseitigen Magnetringstapel gebildet sind. Die beiden Magnetringstapel sind dabei konzentrisch ineinander angeordnet, so dass die radialen Innen- und Außenflächen der Magnetringstapel einander gegenüberliegende Seitenflächen bilden, zwischen denen ein Lagerspalt vorgesehen ist. Die magnetische Abstoßung zwischen den beiden Magnetringstapeln im Bereich dieses Spalts bewirkt dabei die gegenseitige drehbare Lagerung des Rotors und des Stators.

Bei bekannten Pumpen dieser Art besteht das Problem, dass durch eindringende Moleküle eine Verringerung der durch das Magnetlager ausgeübten Lagerkräfte und damit der Tragfähigkeit des Magnetlagers eintritt. Dies führt zu einer Verschlechterung der Lagerung und folglich zu einer Beeinträchtigung der Laufeigenschaften der Pumpe während des Betriebs. Die Abnahme der Lagerkräfte kann auf den während des Betriebs der Vakuumpumpe auftretenden Kontakt der Magnetringe des Permanentmagnetlagers mit den geförderten Medien und Gasen zurückgeführt werden, welcher zu Beschädigungen der Magnetringe und zu einer Verringerung der von den Magnetringen erzeugten Magnetfeldstärke führt. Insbesondere führt der Kontakt der Magnetringe mit den geförderten Gasen zu einer Korrosion des Materials der Magnetringe und zu einem Materialabtrag an den Magnetringen, das heißt einem physischen Verlust von Magnetringmaterial. Ferner kann insbesondere durch den Kontakt mit Wasserstoff eine Versprödung des Magnetringmaterials auftreten, welche einen Materialabtrag oder Rissbildung begünstigt und ebenfalls zu einer Verringerung der Magnetfeldstärke und damit der Lagerkräfte führt.

Um den rotorseitigen Lagerteil und den statorseitigen Lagerteil bzw. die das jeweilige Lagerteil bildenden Magnetringstapel vor Korrosion und/oder Versprödung zu schützen, werden bei Vakuumpumpen der eingangs genannten Art der rotorseitige Lagerteil und/oder der statorseitige Lagerteil gekapselt. Alternativ oder zusätzlich werden die Magnetringe einzeln mit Nickel beschichtet, um die Magnetringe vor Korrosion und Versprödung zu schützen. Allerdings ist die Herstellung einer Kapselung für die Magnetringlager aufwändig und teuer. Gleiches gilt für die Beschichtung der einzelnen Magnetringstapel mit Nickel.

Die EP 0 413 851 A1 und die DE 100 22 061 A1 offenbaren eine Vorrichtung gemäß dem Oberbegriff des Anspruchs 1 bzw. ein Verfahren gemäß dem Oberbegriff des Anspruchs 7. Weiterer Stand der Technik ist aus der nachveröffentlichten EP 2 728 194 A2, DE 691 01 162 T2, US 2011/043063 A1, EP 1 830 081 A1, DE 20 2004 010821 U1 und EP 1 596 068 A2 bekannt.

Aus der Druckschrift DE 10 2007 041 901 A1 ist die Anwendung eines Magnetpulsverfahrens im Rahmen eines Fügeverfahrens für mehrteilige Turbomaschinenrotoren bekannt.

Der vorliegenden Erfindung liegt die Aufgabe zugrunde, eine Vakuumpumpe oder eine Rotationseinheit für eine Vakuumpumpe bereitzustellen, bei der auf herstellungstechnisch einfache und kostengünstige Weise der rotorseitige Lagerteil und/oder der statorseitige Lagerteil dauerhaft vor Korrosion und/oder Versprödung geschützt ist. Außerdem liegt der Erfindung die Aufgabe zugrunde, ein Verfahren zur Herstellung einer Vakuumpumpe oder einer Rotationseinheit für eine Vakuumpumpe bereitzustellen, das einfach und kostengünstig durchführbar ist und über das ein zuverlässiger und dauerhaft Schutz des rotorseitigen Lagerteils und/oder des statorseitigen Lagerteils vor Korrosion und/oder Versprödung erreicht werden kann.

Die Aufgabe wird durch eine Vakuumpumpe oder eine Rotationseinheit für eine Vakuumpumpe mit den Merkmalen des Anspruchs 1 bzw. durch ein Verfahren zur Herstellung einer Vakuumpumpe oder einer Rotationseinheit für eine Vakuumpumpe mit den Merkmalen des Anspruchs 7 gelöst. Bevorzugte Ausführungsformen und Weiterbildungen der Erfindung werden in den abhängigen Ansprüchen beschrieben.

Bei einer erfindungsgemäßen Vakuumpumpe oder einer Rotationseinheit für eine Vakuumpumpe weist die rotorseitige und/ oder statorseitige Schutzwand eine Dicke von maximal 300 Mikrometern auf. Darüber hinaus ist die rotorseitige Schutzwand mit dem Rotor gasdicht verschweißt, und/oder die statorseitige Schutzwand mit dem Stator gasdicht verschweißt.

Durch Verschweißen der rotorseitigen bzw. statorseitigen Schutzwand mit dem Rotor bzw. dem Stator werden die jeweilige Schutzwand und der Rotor bzw. der Stator gasdicht miteinander verbunden. Der von der rotorseitigen Schutzwand und dem Rotor umschlossene, eingekapselte rotorseitige Lagerteil kann somit dauerhaft vor Korrosion und Versprödung, insbesondere durch Wasserstoff, geschützt werden. In der entsprechenden Weise kann der von der statorseitigen Schutzwand und dem Rotor umschlossene, eingekapselte statorseitige Lagerteil dauerhaft vor Korrosion und Versprödung, insbesondere durch Wasserstoff, geschützt werden.

Dabei lässt sich eine Kaltverschweißung, ein Reibrührschweißen, ein Laserschweißen oder ein Elektronenstrahlschweißen der jeweiligen Schutzwand mit dem Rotor bzw. dem Stator bei der Herstellung bzw. beim Zusammenbauen der Vakuumpumpe bzw. der Rotationseinheit auf herstellungstechnisch einfache Weise durchführen, insbesondere nachdem der jeweilige Lagerteil am Rotor bzw. Stator angeordnet wurde und bevor der Stator und der Rotor zusammengesetzt wurden.

Der Begriff "reibrührverschweißt" bezieht sich auf das an sich bekannte Verfahren des Reibrührschweißens, das zumindest vom Grundprinzip her in der WO 93/10935 A1 beschrieben ist.

Dabei schützt die jeweilige Schutzwand der jeweiligen Kapselung die jeweilige Seitenfläche des gekapselten rotorseitigen bzw. statorseitigen Lagerteils vor einem Kontakt mit den durch die Vakuumpumpe geförderten Medien. Die Schutzwand kann dabei die jeweilige Seitenfläche zumindest teilweise und bevorzugt im Wesentlichen vollständig abdecken. Dadurch werden eine infolge des Kontakts des Materials des rotorseitigen bzw. statorseitigen Lagerteils mit diesen Medien hervorgerufene Beschädigung des Lagerteils, insbesondere eine Korrosion und/oder eine Versprödung, und eine daraus resultierende Verschlechterung der Lagerung verringert bzw. vermieden. Es wurde erkannt, dass eine jeweilige Schutzwand vorgesehen werden kann, ohne dass dadurch die gegenseitige magnetische Beeinflussung und magnetische Abstoßung der Lagerteile wesentlich beeinflusst wird, so dass die Schutzwände die Lagerwirkung nicht beeinträchtigen.

Die Langzeitstabilität der durch das Magnetlager ausgeübten Lagerkräfte und der Tragfähigkeit des Magnetlagers wird durch die Kapselung folglich erheblich gesteigert. Somit wird eine Vakuumpumpe bzw. eine Rotationseinheit für eine Vakuumpumpe geschaffen, die eine langfristig zuverlässige, stabile und wirksame magnetische Lagerung und dementsprechend gleichbleibend gute Laufeigenschaften aufweist.

Die vorliegende Erfindung bezieht sich gleichermaßen auf eine Vakuumpumpe und auf eine Rotationseinheit einer solchen Vakuumpumpe, d.h. die den Rotor und den Stator enthaltende Baugruppe einer solchen Vakuumpumpe. Wenn im Nachfolgenden die vorteilhaften Ausführungsformen der Erfindung unter Bezugnahme auf eine Vakuumpumpe erläutert sind, sind diese Erläuterungen, soweit anwendbar, auch auf die Anwendung der Erfindung auf eine Rotationseinheit für eine Vakuumpumpe zu beziehen. Ebenso ist, wenn hierin allgemein Bezug auf eine "Vorrichtung" genommen wird, darunter eine Vakuumpumpe, wie insbesondere eine Turbomolekularpumpe, ebenso zu verstehen wie eine Rotationseinheit für eine Vakuumpumpe, insbesondere für eine Turbomolekularpumpe.

Wenn nachstehend allgemein Bezug auf eine Kapselung genommen wird, ist die zugehörige Beschreibung, soweit anwendbar und nicht anders angegeben, gleichermaßen auf eine Kapselung für den rotorseitigen Lagerteil oder eine Kapselung für den statorseitigen Lagerteil zu beziehen und bezieht sich vorzugsweise sowohl auf eine Kapselung für den rotorseitigen Lagerteil als auch auf eine Kapselung für den statorseitigen Lagerteil der Vakuumpumpe. Prinzipiell kann die gasdichte Kapselung für den rotorseitigen Lagerteil einen Teil des Rotors bilden und die gasdichte Kapselung für den statorseitigen Lagerteil kann einen Teil des Stators bilden.

Das Magnetlager ist vorzugsweise als Permanentmagnetlager ausgebildet, wobei der rotorseitige Lagerteil von einem rotorseitigen Ringstapel aus Permanentmagneten und der statorseitige Lagerteil von einem statorseitigen Ringstapel aus Permanentmagneten gebildet wird. Der jeweilige Ringstapel wird nachfolgend auch als rotorseitiger bzw. statorseitiger Magnetringstapel bezeichnet. Das zwischen den Seitenflächen der Lagerteile vorhandene Magnetfeld bewirkt dabei die gegenseitige Beeinflussung und Abstoßung des rotorseitigen und statorseitigen Lagerteils und somit die gewünschte Lagerwirkung.

Bevorzugt deckt die Schutzwand der Kapselung die Seitenfläche des zugehörigen Lagerteils zumindest bereichsweise und insbesondere über die gesamte Seitenfläche hinweg gasdicht ab, so dass die Seitenfläche nicht mit den von der Pumpe geförderten Medien in Kontakt kommt. Die Schutzwand liegt dabei vorzugsweise zumindest in einem Bereich der Seitenfläche und vorzugsweise über die gesamte Seitenfläche hinweg direkt an der Seitenfläche an, und zwar insbesondere derart, dass die Seitenfläche durch den direkten Kontakt der Schutzwand mit dem die Seitenfläche umgebenden Bereich des Stators bzw. Rotors gasdicht verschlossen wird. Die Schutzwand kann dabei auch einen Hohlraum abdichten, in dem ein Teil der Seitenfläche oder vorzugsweise die gesamte Seitenfläche angeordnet ist bzw. der von einem Teil der Seitenfläche oder der gesamten Seitenfläche begrenzt wird. In diesem Fall kann die Schutzwand prinzipiell auch zumindest bereichsweise nicht direkt an der Seitenfläche anliegen, sondern von der Seitenfläche beabstandet sein.

Gemäß einer vorteilhaften Ausführungsform bildet die jeweilige Kapselung einen geschlossenen gasdichten Aufnahmeraum, der eine im Rotor bzw. Stator ausgebildete Aufnahme für den rotorseitigen bzw. statorseitigen Lagerteil aufweist und der von der jeweiligen Schutzwand gasdicht verschlossen ist. Durch eine solche gasdicht geschlossene Einhausung kann das jeweilige Lagerteil vollständig vor dem Kontakt mit den von der Pumpe geförderten Medien geschützt werden.

Nach einer in Anspruch 1 genannten Alternative ist die rotorseitige Schutzwand mittels einer magnetischen Pulsverformung mit dem Rotor kaltverschweißt. Alternativ oder zusätzlich ist gemäß Anspruch 1 die statorseitige Schutzwand mittels einer magnetischen Pulsverformung mit dem Stator kaltverschweißt. Mittels magnetischer Pulsverformung kann die jeweilige Schutzwand auf einfache, kosten- und zeitsparende Weise mit dem Stator bzw. Rotor gasdicht verbunden werden. Das der magnetischen Pulsverformung zugrunde liegende Verfahren wird auch als magnetische Umformung und Kaltschweißung oder auch als elektromagnetisches Impsschweißen bezeichnet.

Die jeweilige Schutzwand wird dabei innerhalb oder in der Nähe einer elektrischen Spule positioniert und durch die Krafteinwirkung eines Magnetfeldimpulses von sehr hoher Intensität berührungslos umgeformt, wobei die Schutzwand mit einer sehr hohen Geschwindigkeit in Kontakt mit dem Stator bzw. Rotor kommt und im Kontaktbereich eine Kaltverschweißung erfolgt. Die mittels der Kaltverschweißung erreichte Bindung erfolgt dabei auf atomarer Ebene, wodurch eine absolute Gasdichtheit erreicht wird.

Vorteilhaft an einer Kaltverschweißung mittels magnetischer Pulsverformung ist außerdem, dass die Schutzwand durch die magnetische Pulsverformung mit einer derart hohen Geschwindigkeit gegen den Stator bzw. Rotors bewegt wird, dass aufgrund der Verdrängung des zwischen der Schutzwand und dem Stator bzw. Rotor befindlichen Gases ein Mikrogasjet mit einer sehr hohen Geschwindigkeit generiert wird, der die aufeinandertreffenden Oberflächen von Schutzwand und Stator bzw. Rotor reinigt. Eine separate Reinigung der Bereiche der Schutzwand und des Stators bzw. Rotors, die miteinander verschweißt werden sollen, kann somit unterbleiben.

Vorzugsweise ist die rotorseitige und/oder statorseitige Schutzwand als Hohlzylinder ausgebildet. Eine solche Schutzwand lässt sich besonders einfach realisieren und eignet sich außerdem besonders, um die Seitenfläche eines z.B. durch einen zylindermantelförmigen Magnetringstapel gebildeten Lagerteils vor den geförderten Medien zu schützen und beeinträchtigt dabei weder die Laufeigenschaften noch die Lagerung der Pumpe.

Besonders bevorzugt ist der die jeweilige Schutzwand bildende Hohlzylinder koaxial zum rotorseitigen Lagerteil bzw. zum statorseitigen Lagerteil angeordnet. Die Schutzwand ist dabei bevorzugt im Wesentlichen rotationssymmetrisch zur Rotationsachse ausgebildet und angeordnet.

Die von der Schutzwand abgedeckte und vorzugsweise im Wesentlichen zylindermantelförmige Seitenfläche kann dabei durch die radiale Innenfläche oder Außenfläche des jeweiligen Lagerteils gebildet sein, je nachdem welche dieser Flächen dem jeweils anderen Lagerteil zugewandt ist. Dabei kann eine radiale Innenfläche oder Außenfläche der Schutzwand zumindest über einen Teil und vorzugsweise die gesamte Seitenfläche des Lagerteils hinweg parallel zu der Seitenfläche verlaufen und insbesondere direkt an der Seitenfläche des Magnetlagerteils anliegen.

Wie vorstehend beschrieben, bildet die Kapselung für den rotorseitigen und/oder statorseitigen Lagerteil vorzugsweise einen gasdicht geschlossenen Aufnahmeraum, in dem der jeweilige Lagerteil aufgenommen ist. Die Form des Aufnahmeraums ist dabei vorzugsweise an die Form des Lagerteils angepasst und kann dieser im Wesentlichen entsprechen.

Der Aufnahmeraum der Kapselung kann dementsprechend im Wesentlichen zylindermantelförmig oder ringförmig ausgebildet sein. Die Schutzwand bildet bevorzugt eine der Seitenfläche des Lagerteils zugewandte Wand des Aufnahmeraums. Vorzugsweise erstreckt sich die Schutzwand der Kapselung für den rotorseitigen Teil des Magnetlagers und/oder die Schutzwand der Kapselung für den statorseitigen Teil des Magnetlagers in einem magnetischen Spalt, der zwischen den gegenüberliegenden und einander zugewandten Seitenflächen der beiden Magnetlagerteile ausgebildet ist. Zwischen den Schutzwänden der Kapselungen kann ein freier Luftspalt verbleiben, welcher eine gegenüber dem magnetischen Spalt verringerte Spaltbreite aufweist und welcher eine berührungsfreie gegenseitige Bewegung der beiden Lagerteile zueinander ermöglicht. Der verbleibende freie Luftspalt kann beispielsweise eine Breite von bis zu einem Millimeter aufweisen.

Die Schutzwand kann aus Aluminium, Edelstahl, insbesondere nicht-magnetischem Edelstahl, Gold, Silber, Wolfram, Kupfer, Platin oder Nickel bestehen oder zumindest einen der genannten Stoffe aufweisen. Dadurch kann ein effektiver Schutz vor Versprödung und/oder Korrosion erreicht werden.

Die Schutzwand weist eine Dicke von maximal 300 Mikrometern, auf, weiter bevorzugt von maximal 150 Mikrometern, weiter bevorzugt von maximal 100 Mikrometern, weiter bevorzugt von maximal 75 Mikrometern, noch weiter bevorzugt von maximal 50 Mikrometern und noch weiter bevorzugt von Maximal 40 Mikrometern aufweisen. Durch eine derart dünnwandige Schutzwand kann bereits ein effektiver Schutz vor Versprödung und/oder Korrosion erreicht werden, insbesondere wenn die Schutzwand aus einem der vorgenannten Stoffe besteht.

Nach einer bevorzugten Ausgestaltung der Erfindung weist die Schutzwand, insbesondere je nach Anwendungsprozess zum Beispiel bei Aluminium, eine Beschichtung auf, insbesondere eine Oxidkeramikschicht, wie beispielsweise Kepla Coat. Dadurch kann der von der Schutzwand bewirkte Schutz vor Korrosion und/oder Versprödung weiter verbessert werden. Dabei ist es besonders vorteilhaft, wenn die Beschichtung ein korrosionshemmendes und/oder vor Versprödung schützendes Material, wie etwa Nickel oder ein Fluorpolymer, aufweist.

Nach einer weiteren bevorzugten Ausgestaltung weist die Vakuumpumpe oder Rotationseinheit ein Fanglager auf, wobei das Fanglager eine radiale Bewegung des Stators und des Rotors relativ zueinander begrenzt, und wobei - in axialer Richtung der Vakuumpumpe oder Rotationseinheit gesehen - das Fanglager außerhalb des rotorseitigen Lagerteils und des statorseitigen Lagerteils angeordnet ist.

Durch die Anordnung des Fanglagers außerhalb des Bereichs des Magnetlagers kann rotorseitig ein Zapfenabschnitt eingespart werden, der in den Innenbereich des Magnetlagers bzw. in einen am Rotor vorgesehenen Aufnahmeraum für den Stator hineinragt. Aufgrund des eingesparten Zapfenabschnitts wird der Aufnahmeraum einfacher zugänglich, so dass die Montage des rotorseitigen Lagerteils am Rotor vereinfacht wird. Außerdem kann die rotorseitige Schutzwand einfacher mit dem Rotor verschweißt werden.

Mit der Anordnung des Fanglagers außerhalb des statorseitigen bzw. rotorseitigen Lagerteils ist insbesondere gemeint, dass das Fanglager in axialer Richtung gesehen versetzt zu den Lagerteilen angeordnet ist, also sich zum Beispiel bei einer aufrechtstehenden Vakuumpumpe unterhalb des statorseitigen bzw. rotorseitigen Lagerteils befindet.

Bei einem erfindungsgemäßen Verfahren wird die rotorseitige Schutzwand mit dem Rotor verschweißt, und/oder die statorseitige Schutzwand wird mit dem Stator verschweißt.

Das erfindungsgemäße Verfahren eignet sich zur Herstellung einer wie vorstehend beschriebenen erfindungsgemäßen Vakuumpumpe bzw. einer erfindungsgemäßen Rotoreinheit für eine Vakuumpumpe. Die hierin in Bezug auf die Vakuumpumpe bzw. Rotationseinheit beschriebenen vorteilhaften Ausführungsformen und Vorteile stellen bei entsprechender Anwendung vorteilhafte Ausführungsformen und Vorteile des erfindungsgemäßen Verfahrens dar. Dies gilt insbesondere für die vorstehend beschriebene Herstellung einer gasdichten Verbindung zwischen der Schutzwand und dem Rotor bzw. Stator.

Vorzugsweise werden die rotorseitige Schutzwand mit dem Rotor und/oder die statorseitige Schutzwand mit dem Stator verschweißt bevor der Rotor und der Stator zusammengesetzt werden.

Nach einer Alternative des Verfahrens gemäß Anspruch 7 wird die rotorseitige Schutzwand vor der Seitenfläche des rotorseitigen Lagerteils angeordnet und mittels magnetischer Pulsverformung mit dem Rotor kaltverschweißt.

Vorzugsweise wird die rotorseitige Schutzwand mit wenigstens einem oberhalb oder unterhalb des rotorseitigen Lagerteils vorgesehenen Metallring, insbesondere aus Aluminium oder Edelstahl, mittels magnetischer Pulsverformung kaltverschweißt. Die Angabe "oberhalb oder unterhalb" bezieht sich dabei auf die axiale Richtung der Vakuumpumpe bzw. der Rotationseinheit bzw. des Magnetlagers. Der Metallring befindet sich somit in axialer Richtung gesehen oberhalb oder unterhalb des rotorseitigen Lagerteils.

Bevorzugt wird der Metallring vor dem Kaltverschweißen mit der rotorseitigen Schutzwand mit dem Rotor verbunden, insbesondere ebenfalls durch Kaltverschweißen mittels magnetischer Pulsverformung.

Nach einer weiteren Alternative des Verfahrensanspruchs 7 wird die statorseitige Schutzwand vor der Seitenfläche des statorseitigen Lagerteils angeordnet und mittels magnetischer Pulsverformung mit dem Stator kaltverschweißt.

Vorzugsweise wird die statorseitige Schutzwand mit wenigstens einem oberhalb oder unterhalb des statorseitigen Lagerteils angeordneten Metallring, insbesondere aus Aluminium oder Edelstahl, mittels magnetischer Pulsverformung kaltverschweißt. Die Angabe "oberhalb oder unterhalb" bezieht sich dabei auf die axiale Richtung der Vakuumpumpe bzw. der Rotationseinheit bzw. des Magnetlagers. Der Metallring befindet sich somit in axialer Richtung gesehen oberhalb oder unterhalb des statorseitigen Lagerteils.

Nach einer bevorzugten Weiterbildung des erfindungsgemäßen Verfahrens wird der Metallring vor dem Kaltverschweißen mit der statorseitige Schutzwand mit dem Stator verbunden, insbesondere ebenfalls durch Kaltverschweißen mittels magnetischer Pulsverformung.

Nachfolgend wird die vorliegende Erfindung beispielhaft anhand von vorteilhaften Ausführungsformen unter Bezugnahme auf die beigefügten Figuren beschrieben. Es zeigen, jeweils schematisch,
- Fig. 1: eine Vakuumpumpe in einer geschnittenen Darstellung,
- Fig. 2: einen Ausschnitt der in Fig. 1 dargestellten Vakuumpumpe in einer geschnittenen Darstellung,
- Fig. 3: einen einzelnen Permanentmagnetring in perspektivischer Darstellung,
- Fig. 4: ein Ausschnitt der in Fig. 1 und 2 dargestellten Vakuumpumpe mit einem Magnetlager und zwei Kapselungen im Längsschnitt,
- Fig. 5: einen Teil der in Fig. 1, 2 und 4 dargestellten Vakuumpumpe mit einer rotorseitigen Kapselung im Längsschnitt,
- Fig. 6: den in Fig. 5 gezeigten Teil der Vakuumpumpe nach einer Reduzierung der Wandstärke der Kapselung,
- Fig. 7: einen Teil der in Fig. 1, 2 und 4 bis 6 dargestellten Vakuumpumpe mit einer statorseitigen Kapselung im Längsschnitt,
- Fig. 8: den in Fig. 7 gezeigten Teil der Vakuumpumpe nach einer Reduzierung der Wandstärke der Kapselung,
- Fig. 9 bis 15: dienen zur Illustration, wie eine rotorseitige Schutzwand zur gasdichten Abdeckung eines rotorseitigen Lagerteils mit einem Rotor mittels magnetischer Pulsverformung kaltverschweißt werden kann,
- Fig. 16 bis 19: dienen zur Illustration, wie eine statorseitige Schutzwand zur gasdichten Abdeckung eines statorseitigen Lagerteils mit einem Stator mittels magnetischer Pulsverformung kaltverschweißt werden kann, und
- Fig. 20: einen Ausschnitt einer abgewandelten Ausgestaltung der Vakuumpumpe von Fig. 1 in einer Querschnittsdarstellung.

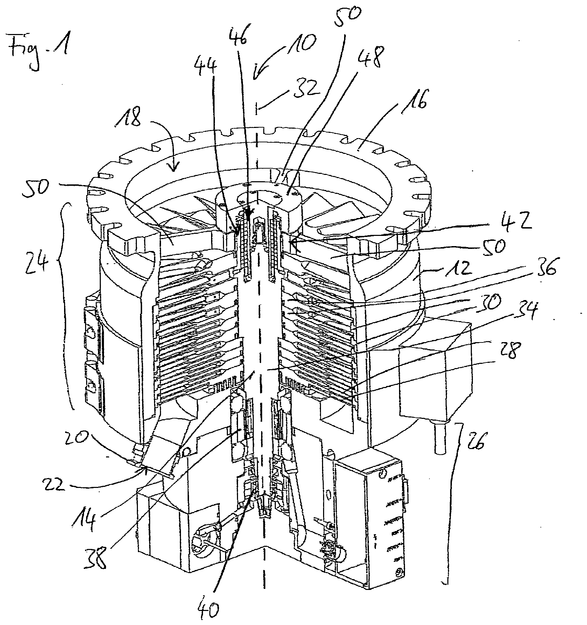

Fig. 1 zeigt eine als Turbomolekularpumpe ausgebildete Vakuumpumpe 10 in einer keilförmig aufgeschnittenen Darstellung.

Die Vakuumpumpe 10 umfasst einen Stator, welcher einen Teil eines mehrteiligen Pumpengehäuses 12 umfasst, sowie einen Rotor 14, der gegenüber dem Stator drehend antreibbar gelagert ist.

Die Vakuumpumpe 10 umfasst an ihrer Hochvakuumseite einen von einem Saugflansch 16 umgebenen Pumpeneinlass 18 zur Verbindung mit einem zu evakuierenden Volumen und einen im Bereich der Vorvakuumseite der Vakuumpumpe 10 angeordneten, von einem Vorvakuumflansch 20 umgebenen Pumpenauslass 22.

Der Stator und der Rotor 14 bilden zusammen eine Rotationseinheit 24 der Vakuumpumpe 10, die mit einem Basisabschnitt bzw. Unterteil 26 der Pumpe 10 lösbar verbunden ist.

Der Stator umfasst mehrere Statorscheiben 28, die in dem Gehäuse 12 angeordnet und über Distanzelemente 30 in einem definierten Abstand zueinander gehalten sind.

Der um die Rotationsachse 32 drehbar gelagerte Rotor 14 umfasst eine Rotorwelle 34, welche mehrere Rotorscheiben 36 trägt, wobei jeweils eine Rotorscheibe 36 in dem Zwischenraum zwischen zwei Statorscheiben 28 angeordnet ist. Die Statorscheiben 28 und Rotorscheiben 36 weisen jeweils eine mehrere Schaufeln umfassende pumpaktive Struktur auf, so dass eine Statorscheibe 28 jeweils mit einer benachbarten Rotorscheibe 36 eine Pumpstufe der Turbomolekularpumpe 10 bildet.

In dem Unterteil 26 ist eine Antriebseinheit 38 angeordnet, die beispielsweise einen Elektromotor umfassen kann und die dazu ausgebildet ist, den Rotor 14 zur Bereitstellung der Pumpwirkung drehend anzutreiben.

Ferner weist die Pumpe 10 ein vorvakuumseitiges Lager 40 auf, welches zur drehbaren Lagerung des Rotors 14 gegenüber dem Stator ausgebildet ist. Das vorvakuumseitige Lager 40 ist dazu eingerichtet, radiale und axiale Lagerkräfte aufzunehmen und ist vorliegend als geschmiertes Wälzlager ausgebildet.

An der Hochvakuumseite weist die Pumpe 10 ein weiteres, als Permanentmagnetlager ausgebildetes Lager 42 auf, das einen rotorseitigen Lagerteil 44 und einen statorseitigen Lagerteil 46 umfasst und das eine drehbare Lagerung des Rotors 14 gegenüber dem Stator bewirkt.

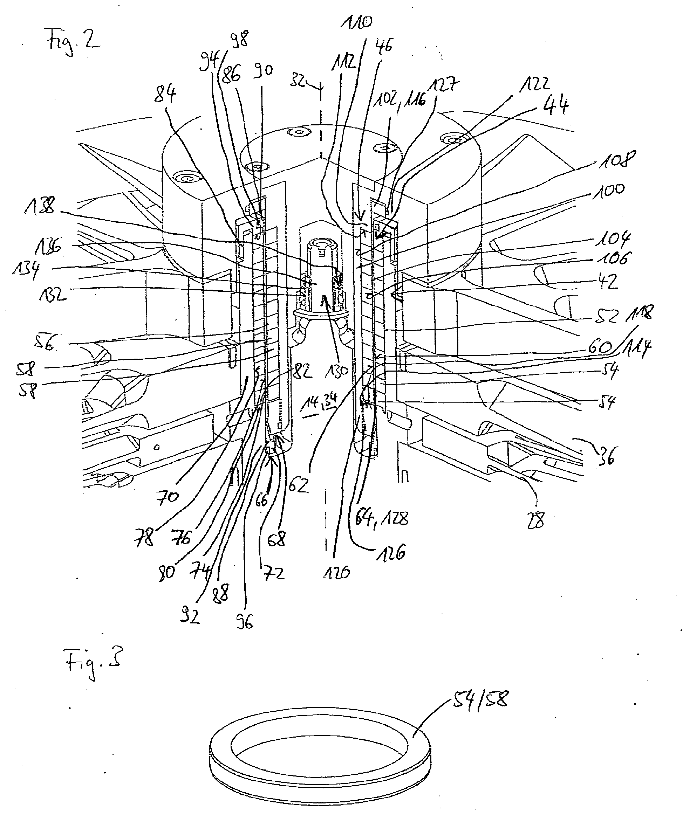

Der statorseitige Lagerteil 46 ist dabei an einer Aufhängung 48 angebracht, die in der Mitte einer den Pumpeneinlass 18 bildenden Öffnung angeordnet ist und über mehrere in der Öffnung angeordnete radiale Streben 50 mit dem Gehäuse 12 verbunden ist. Die Pumpe 10 weist eine gasdichte Kapselung 66 (siehe z.B. Fig. 2) für den rotorseitigen Lagerteil 44 und eine gasdichte Kapselung 68 (siehe z.B. Fig. 2) für den statorseitigen Lagerteil 46 auf, die nachfolgend unter Bezugnahme auf Fig. 2 bis 8 genauer erläutert sind.

Fig. 2 zeigt einen das Magnetlager 42 enthaltenden Ausschnitt der Pumpe 10 von Fig. 1 in vergrößerter Darstellung. Das Lager 42 umfasst einen rotorseitigen Magnetringstapel 52 aus mehreren permanentmagnetischen Rotormagnetringen 54, die den rotorseitigen Lagerteil 44 bilden, und einen statorseitigen Magnetringstapel 56 aus mehreren permanentmagnetischen Statormagnetringen 58, die den statorseitigen Lagerteil 46 bilden. Die Magnetringe 54, 58 eines Stapels 52, 56 sind dabei in axialer Richtung aufeinander gestapelt und bilden eine zumindest näherungsweise zylindermantelförmige Grundform des jeweiligen Stapels 52, 56. Fig. 3 zeigt eine perspektivische Darstellung einer beispielhaften Ausführung eines geeigneten permanentmagnetischen Rings 54 bzw. 58.

Der im Wesentlichen zylindermantelförmige Rotorstapel 52 und der im Wesentlichen zylindermantelförmige Statorstapel 56 sind im Wesentlichen koaxial zueinander und jeweils im Wesentlichen koaxial zu der Rotationsachse 32 der Pumpe 10 angeordnet. Der Statorstapel 56 ist innerhalb des Rotorstapels 52 angeordnet, so dass die im Wesentlichen zylindermantelförmige radiale Innenfläche 60 des Rotorstapels 52 der ebenfalls im Wesentlichen zylindermantelförmigen radialen Außenfläche 62 des Statorstapels 56 gegenüberliegt. Die radiale Innenfläche 60 des Rotorstapels 52 und die radiale Außenfläche 62 des Statorstapels 56 bilden somit einander gegenüberliegende Seitenflächen des rotorseitigen Lagerteils 44 und des statorseitigen Lagerteils 46.

Zwischen der radialen Innenfläche 60 des Rotorstapels 52 und der radialen Außenfläche 62 des Statorstapels 56 ist ein zumindest näherungsweise zylindermantelförmiger radialer magnetischer Spalt 64 ausgebildet, der durch die Magnetringe 54, 58 der Stapel 52, 56 begrenzt wird.

Die Pumpe 10 umfasst eine gasdichte Kapselung 66 für den rotorseitigen Lagerteil 44 und eine gasdichte Kapselung 68 für den statorseitigen Lagerteil 46, welche den jeweils gekapselten Lagerteil 44 bzw. 46 und insbesondere dessen Seitenfläche 60 bzw. 62 vor dem Kontakt mit den von der Pumpe 10 geförderten Medien schützt.

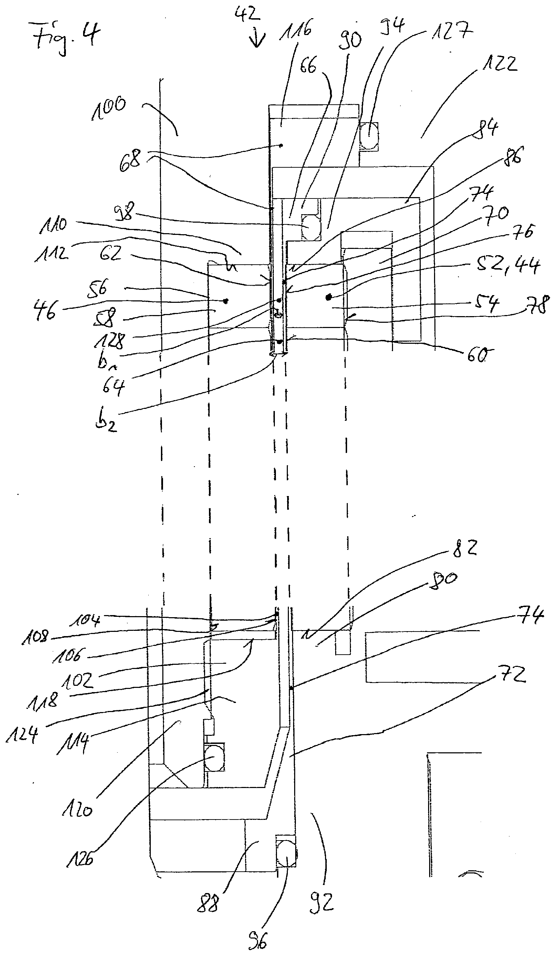

Fig. 4 zeigt eine gegenüber Fig. 2 vergrößerte Darstellung eines Ausschnitts der Pumpe 10 einschließlich der wesentlichen Bestandteile der rotorseitigen Kapselung 66 und der statorseitigen Kapselung 68 im Längsschnitt.

Die rotorseitige Kapselung kann einen zumindest näherungsweise rotationssymmetrischen Träger 70 für den rotorseitigen Lagerteil 44 und eine im Wesentlichen rotationssymmetrische rotorseitige Hülse 72 aufweisen. Bei dem Träger 70 handelt es sich um ein Teil des Rotors 14, wobei der Träger 70 am Rotor 14 festgelegt sein kann.

Die Hülse 72 umfasst eine im Wesentlichen zylindermantelförmige Schutzwand 74, die die radiale Innenfläche 60 des Rotorstapels 52 abdeckt. Die Schutzwand 74 ist in der vergrößerten Darstellung von Fig. 4 besonders deutlich sichtbar. Der Träger 70 und die Hülse 72 bilden einen gasdicht geschlossenen Aufnahmeraum, in dem der rotorseitige Lagerteil 44 aufgenommen ist und der entsprechend der Form des rotorseitigen Lagerteils 44 zumindest näherungsweise zylindermantelförmig oder kreisringförmig ausgestaltet ist.

Eine im Wesentlichen zylindermantelförmige radiale Außenfläche 76 der Schutzwand 74 begrenzt den Aufnahmeraum radial nach innen hin. Der Träger 70 weist eine im Wesentlichen zylindermantelförmige radiale Innenfläche 78 auf, die den Aufnahmeraum radial nach außen hin begrenzt. Die radiale Innenfläche 78 des Trägers 70 bewirkt dabei gleichzeitig eine Festlegung der Rotorringe 54 in radialer Richtung, wobei die Rotorringe 54 an der radialen Innenfläche 78 des Trägers 70 anliegen können.

An dem unteren axialen Ende des Rotorstapels 52 ist ein Schulterabschnitt 80 des Trägers 70 und somit des Rotors 14 vorgesehen, welcher eine ringförmige Deckfläche 82 bildet, die den Aufnahmeraum in axialer Richtung nach unten hin begrenzt. Der Schulterabschnitt 80 bewirkt gleichzeitig eine Festlegung der Rotorringe 54 in axialer Richtung. An dem oberen axialen Ende des Rotorstapels 52 ist ein Abschlussring 84 des Trägers 70 angeordnet, welcher eine ringförmige Deckfläche 86 bildet, die den Aufnahmeraum in axialer Richtung nach oben hin begrenzt. Der Abschlussring 84 ist auf den Abschnitt des Trägers 70 aufgepresst, der die radiale Innenfläche 78 bildet, kann alternativ aber auch in sonstiger Weise, insbesondere lösbar, z.B. durch Verschrauben, an diesem Abschnitt befestigt sein. Der Abschlussring 84 wird bei der Herstellung der Pumpe 10 nach dem Einsetzen der Rotorringe 54 in den Träger 70 aufgepresst und bewirkt eine Festlegung der Rotorringe 54 in axialer Richtung. Der Schulterabschnitt 80, der die radiale Innenfläche 78 bildende Abschnitt und der Abschlussring 84 des Trägers 70 definieren zusammen einen C-förmigen Querschnitt des Trägers 70.

Die Hülse 72 umfasst an ihrem oberen und ihrem unteren axialen Ende jeweils einen sich in axialer Richtung über die Schutzwand 74 hinaus erstreckenden ringförmigen Kopplungsabschnitt 88, 90, welcher gegenüber der Schutzwand 74 verstärkt ausgebildet ist, wie in Fig. 4 besonders deutlich zu sehen ist. Die Kopplungsabschnitte 88, 90 bilden dabei jeweils mit einem gegenüberliegenden Kopplungsabschnitt 92, 94 des Trägers 70 eine gasdichte Verbindung, welche den Aufnahmeraum für den Rotorstapel 52 nach außen hin gasdicht abdichtet. Zwischen einem Kopplungsabschnitt 88, 90 der Hülse 72 und dem entsprechenden Kopplungsabschnitt 92, 94 des Trägers 70 ist jeweils ein rotationssymmetrisches Dichtungselement 96, 98 in Form eines O-Rings angeordnet, an dem jeweils sowohl der Kopplungsabschnitt 88, 90 der Hülse 72 als auch der zugehörige Kopplungsabschnitt 92, 94 des Trägers 70 dichtend anliegen. Die Hülse 72 weist in den Kopplungsabschnitten 88, 90 jeweils ein radiales Übermaß auf, welches dazu führt, dass die Hülse 72 in den Kopplungsabschnitten 88, 90 jeweils unter einer radialen Spannung an dem Dichtungselement 96, 98 anliegt. Dadurch wird eine dichtende Anlage an dem Dichtungselement 96, 98 gewährleistet. Weiter wird eine Zentrierung und eine Fixierung der Hülse 72 erreicht.

Wie in Fig. 4 für den unteren Kopplungsabschnitt 88 gezeigt, kann ein Kopplungsabschnitt 88, 90 der Hülse 72 auch direkt an dem jeweils zugeordneten Kopplungsabschnitt 92, 94 des Trägers 70 anliegen, und zwar vorzugsweise unter einer radialen mechanischen Spannung. Dadurch kann sowohl eine zusätzliche Dichtwirkung als auch eine mechanische Befestigung der Hülse 72 an dem Träger 70 bewirkt werden. Der Kopplungsabschnitt 88, 90 der Hülse 72 kann dabei z.B. in einem Press- oder Schrumpfsitz an dem Kopplungsabschnitt 92, 94 des Trägers 70 befestigt sein. Um die gewünschte mechanische Pressung zu erhalten, kann der jeweilige Kopplungsabschnitt 88, 90 der Hülse 72 dabei in dem Bereich seiner direkten Anlage an dem Kopplungsabschnitt 92, 94 des Trägers 70 ein radiales Übermaß gegenüber dem Kopplungsabschnitt 92, 94 des Trägers 70 aufweisen.

Der die Schutzwand 74 bildende Abschnitt und die sich daran anschließenden Kopplungsabschnitte 88, 90 der Hülse 72 definieren zusammen eine im Wesentlichen Z-förmige Längsschnittform der zumindest näherungsweise rotationssymmetrischen Hülse 72, wobei die kurzen Schenkel der Z-Form durch die Kopplungsabschnitte 88, 90 gebildet sind und der lange Schenkel der Z-Form die Schutzwand 74 umfasst.

Die statorseitige Kapselung 68 ist ähnlich aufgebaut wie die rotorseitige Kapselung 66.

Die statorseitige Kapselung 68 umfasst einen zumindest näherungsweise rotationssymmetrischen Träger 100 für den statorseitigen Lagerteil 46 und eine im Wesentlichen rotationssymmetrische statorseitige Hülse 102. Dabei ist der Träger 100 ein Teil des Stators, wobei der Träger 100 am Stator festgelegt sein kann. Die Hülse 102 umfasst eine im Wesentlichen zylindermantelförmige Schutzwand 104, die die radiale Außenfläche 62 des Statorstapels 56 abdeckt. Die Schutzwand 104 ist in Fig. 4 besonders gut sichtbar. Der Träger 100 und die Hülse 102 bilden einen gasdicht geschlossenen Aufnahmeraum, in dem der statorseitige Lagerteil 46 aufgenommen ist und der entsprechend der Form des statorseitigen Lagerteils 46 zumindest näherungsweise zylindermantelförmig ausgestaltet ist.

Eine im Wesentlichen zylindermantelförmige radiale Innenfläche 106 der Schutzwand 104 begrenzt den Aufnahmeraum dabei radial nach außen hin. Der Träger 100 weist eine im Wesentlichen zylindermantelförmige radiale Außenfläche 108 auf, die den Aufnahmeraum radial nach innen hin begrenzt. Die radiale Außenfläche 108 des Trägers 100 bewirkt dabei gleichzeitig eine Festlegung der Statorringe 58 in radialer Richtung, wobei die Statorringe 58 an der radialen Außenfläche 108 anliegen können.

An dem oberen axialen Ende des Statorstapels 56 ist ein Schulterabschnitt 110 des Trägers 100 angeordnet, welcher eine ringförmige Deckfläche 112 bildet, die den Aufnahmeraum in axialer Richtung nach oben hin begrenzt. Der Schulterabschnitt 110 bewirkt gleichzeitig eine Festlegung der Statorringe 58 in axialer Richtung.

An dem unteren axialen Ende des Statorstapels 56 ist einer von zwei Kopplungsabschnitten 114, 116 der Hülse 102 ausgebildet, die sich jeweils an einem axialen Ende der Hülse 102 in axialer Richtung über die Schutzwand 104 hinaus erstrecken. Die Kopplungsabschnitte 114, 116 und der die Schutzwand 104 bildende Hülsenabschnitt definieren zusammen eine im Wesentlichen Z-förmige Längsschnittform der Hülse 102, wobei die Kopplungsabschnitte 114, 116 die kurzen Schenkel der Z-Form bilden und der lange Schenkel der Z-Form die Schutzwand 104 umfasst.

Der untere Kopplungsabschnitt 114 bildet eine ringförmige Deckfläche 118, die den Aufnahmeraum für den Statorstapel 56 in axialer Richtung begrenzt. Der Kopplungsabschnitt 114 bewirkt dabei eine Festlegung der Statorringe 58 in axialer Richtung.

Die Kopplungsabschnitte 114, 116 sind jeweils gegenüber der Schutzwand 104 verstärkt ausgebildet und bilden mit einem entsprechenden Kopplungsabschnitt 120, 122 des Trägers 100 eine gasdichte Verbindung, welche den Aufnahmeraum für den Statorstapel 56 nach außen hin abdichtet.

Der untere Kopplungsabschnitt 114 der Hülse 102 umfasst ein in Fig. 4 gezeigtes, an der radialen Innenseite der Hülse 102 angeordnetes und in Umfangsrichtung der Hülse 102 umlaufendes Innengewinde 124 mit mehreren, in Fig. 4 nicht eigens dargestellten radialen Gewindevorsprüngen und -vertiefungen. Das Innengewinde 124 ist mit einem an dem zugehörigen Kopplungsabschnitt 120 des Trägers 100 angeordneten, komplementären Außengewinde verschraubt, wodurch eine mechanisch feste und weitgehend gasdichte Verbindung zwischen den Kopplungsabschnitten 114, 120 geschaffen wird.

Der obere Kopplungsabschnitt 116 der Hülse 102 liegt direkt und unter einer durch ein radiales Übermaß des Kopplungsabschnitts 116 hervorgerufenen Pressspannung an dem zugehörigen Kopplungsabschnitt 122 des Trägers 100 an und ist dadurch mechanisch fest und gasdicht mit dem Kopplungsabschnitt 122 verbunden.

Zwischen den miteinander verbundenen Kopplungsabschnitten 114 und 120 bzw. 116 und 122 sind ferner Dichtungselemente 126, 127 in Form von O-Ringen vorgesehen, an denen die Kopplungsabschnitte 114 und 120 bzw. 116 und 122 jeweils dichtend anliegen, wodurch eine noch bessere gasdichte Verbindung geschaffen wird.

Wie in Fig. 2 und 4 gezeigt, sind die Hülsen 72 und 102 innerhalb des durch die Magnetringstapel 52 und 56 gebildeten magnetischen Spalts 64 angeordnet. Die Schutzwände 74, 104 der Hülsen 72 und 102 liegen direkt an den Seitenflächen 60, 62 der Magnetringstapel 52 und 56 an und weisen eine im Wesentlichen konstante Wandstärke auf, so dass zwischen den Schutzwänden 74, 104 ein freier Luftspalt 128 verbleibt, welcher ebenso wie der magnetische Spalt 64 im Wesentlichen zylindermantelförmig ausgebildet ist. Die Schutzwände 74, 104 weisen eine derart geringe Wandstärke auf, dass die in Fig. 4 gezeigte Spaltbreite b₁ des Luftspalts 128 gegenüber der Breite b₂ des magnetischen Spalts 64 nur geringfügig verringert ist. Hierdurch wird selbst bei einer geringen Spaltbreite b₂ des magnetischen Spalts 64 eine Kollision des Rotors und des Stators im Bereich der Schutzwände 74, 104 zuverlässig vermieden.

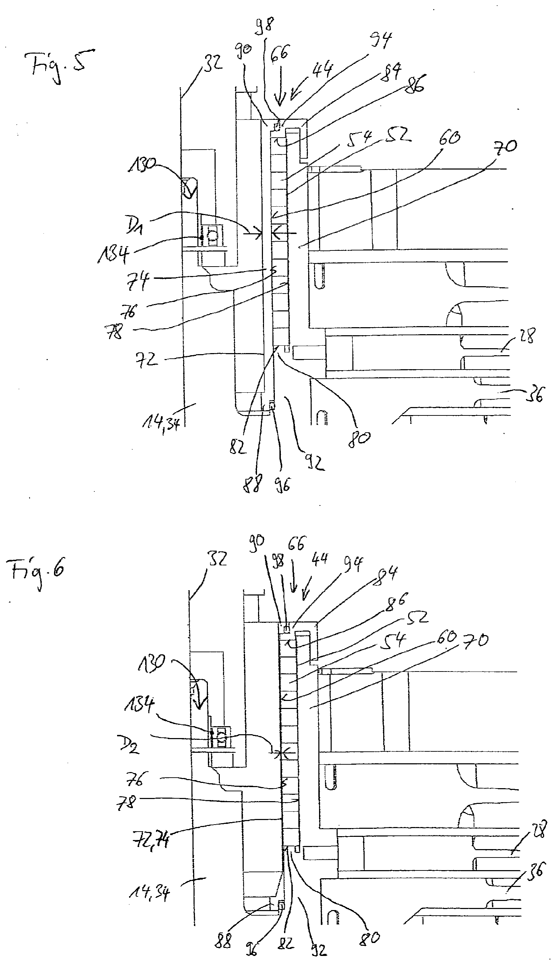

Fig. 5 bis 8 veranschaulichen ein Verfahren zur Herstellung einer wie in Fig. 1, 2 und 4 gezeigten Pumpe 10 mit einer geringen Wandstärke der Schutzwände 74, 104. Fig. 5 bis 8 zeigen jeweils einen Ausschnitt der Pumpe 10 während unterschiedlicher Herstellungsstadien. Der besseren Übersichtlichkeit halber ist in Fig. 5 bis 8 jeweils nur die rechte Hälfte der Pumpe 10 dargestellt.

Fig. 5 zeigt den rotorseitigen Teil der Pumpe 10 unmittelbar nach dem Befestigen der Hülse 72 an dem Träger 70. Die Hülse 72 wird durch einen Press-Füge-Prozess an dem Träger 70 befestigt, wobei eine erhebliche Krafteinwirkung erfolgt, insbesondere um den Kopplungsabschnitt 88 im Presssitz an dem Kopplungsabschnitt 92 des Trägers 70 zu befestigen. Wie in Fig. 5 gezeigt weist die Schutzwand 74 der Hülse 72 eine relativ hohe ursprüngliche Wandstärke D₁ auf, die es der Hülse 72 ermöglicht, den während des Press-Füge-Prozesses auftretenden Kräften standzuhalten.

Fig. 6 zeigt den in Fig. 5 gezeigten Teil der Pumpe 10 nach einem sich an das Befestigen der Hülse 72 an dem Träger 70 anschließenden Materialentfernungsschritt, welcher insbesondere ein Drehen oder Schleifen umfasst. Wie in Fig. 6 ersichtlich wird die Schutzwand 74 im Rahmen dieses Materialentfernungsschrittes auf eine deutlich geringere Wandstärke D₂ gebracht, welche die Realisierung eines magnetischen Spaltes 64 (siehe z.B. Fig. 4) mit erforderlicher Breite ermöglicht.

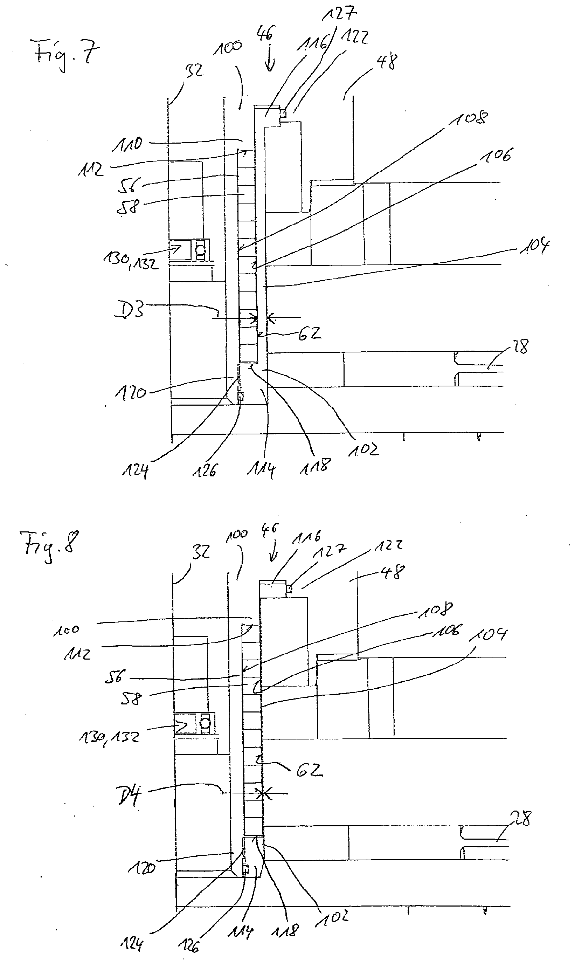

Fig. 7 zeigt den statorseitigen Teil der Pumpe 10 unmittelbar nach dem Befestigen der Hülse 102 an dem Träger 100. Die Hülse 102 kann durch eine Schraubverbindung 124 an dem Träger 100 befestigt sein, wobei zusätzlich in dem oberen axialen Endbereich eine Pressung erfolgt, so dass im Zuge der Befestigung eine erhebliche Krafteinwirkung auf die Hülse 102 stattfindet. Wie in Fig. 7 gezeigt, weist die Schutzwand 104 der Hülse 102 eine relativ hohe ursprüngliche Wandstärke D₃ auf, die es der Hülse 102 ermöglicht, den während der Befestigung auftretenden Kräften standzuhalten.

Fig. 8 zeigt den in Fig. 7 gezeigten Teil der Pumpe 10 nach einem sich an das Befestigen der Hülse 102 an dem Träger 100 anschließenden Materialentfernungsschritt, welcher insbesondere ein Drehen oder Schleifen umfasst. Wie in Fig. 8 ersichtlich, wird die Schutzwand 104 im Rahmen dieses Materialentfernungsschrittes auf eine deutlich geringere Wandstärke D₄ gebracht, welche die Realisierung eines magnetischen Spaltes 64 (siehe z.B. Fig. 4) mit erforderlicher Breite ermöglicht.

Die Pumpe 10 umfasst ein in Fig. 2 gezeigtes Fanglager 130, welches einen drehbaren Anschlag für den Rotor 14 bildet und eine radiale Bewegung des Stators und des Rotors 14 relativ zueinander begrenzt. Eine solche Bewegung kann z.B. durch während des Betriebs der Pumpe 10 auftretende Stöße oder Vibrationen hervorgerufen werden. Das Fanglager 130 ist dazu ausgebildet, zu verhindern, dass die beiden Hülsen 72, 102 und insbesondere deren Schutzwände 74, 104 infolge einer solchen radialen Relativbewegung mechanisch miteinander in Kontakt geraten und die Pumpe 10 dadurch beschädigt wird.

Das Fanglager 130 umfasst ein im Inneren des Permanentmagnetlagers 42 angeordnetes, als Kugellager ausgebildetes Wälzlager 132, welches die Aufhängung 48 bzw. den Träger 100 drehbar mit einer als Anschlag dienenden Fanghülse 134 verbindet. Der Rotor 14 weist einen Zapfenabschnitt 136 auf, der sich in die Fanghülse 134 hinein erstreckt. Zwischen der Fanghülse 134 und dem Zapfenabschnitt 136 ist im Ruhezustand bzw. bei gleichlaufendem Betrieb der Pumpe 10 ein ringförmiger freier Spalt 138 ausgebildet, so dass die Fanghülse 134 und der Zapfenabschnitt 136 sich in diesem Zustand nicht berühren und der Rotor 14 außer Eingriff mit dem Kugellager 132 steht. Erst bei einer radialen Auslenkung des Rotors 14 berühren sich die Fanghülse 134 und der Zapfenabschnitt 136, so dass der Rotor 14 mit dem Kugellager 132 in Eingriff gelangt und das Kugellager 132 mit der Fanghülse 134 einen radialen Anschlag für den Rotor 14 bildet, der eine Kollision der Hülsen 72, 102 verhindert. Der Spalt 138 kann dazu eine geringere radiale Spaltbreite aufweisen als der Luftspalt 128. Da der durch das Kugellager 132 gebildete Anschlag eine drehende Relativbewegung des Rotors 14 gegenüber dem Stator zulässt, wird eine abrupte Abbremsung des Rotors 14 bei dem Eingreifen des Fanglagers 130 vermieden. Das Kugellager 132 ist als nicht geschmiertes Kugellager 132 ausgebildet, so dass eine Verschmutzung des durch die Pumpe 10 erzeugten Vakuums ausgeschlossen ist.

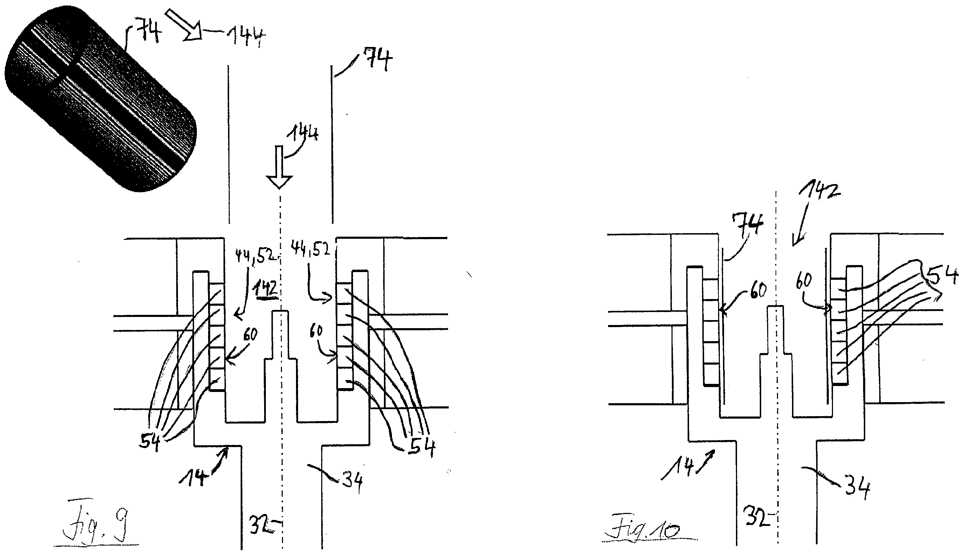

Mit Bezug auf die Fig. 9 bis 15 wird nun eine bevorzugte Ausführungsform eines Verfahrens beschrieben, mittels dem eine rotorseitige Schutzwand 74 zur gasdichten Abdeckung bzw. Einkapselung eines rotorseitigen Lagerteils 44 mit einem Rotor 14 unter Verwendung eines magnetischen Pulsverformungs-Verfahrens kaltverschweißt werden kann. Alternativ kann hier auch ein Mischverfahren zwischen dem zuvor genannten Verfahren und dieser Ausführungsform Anwendung finden.

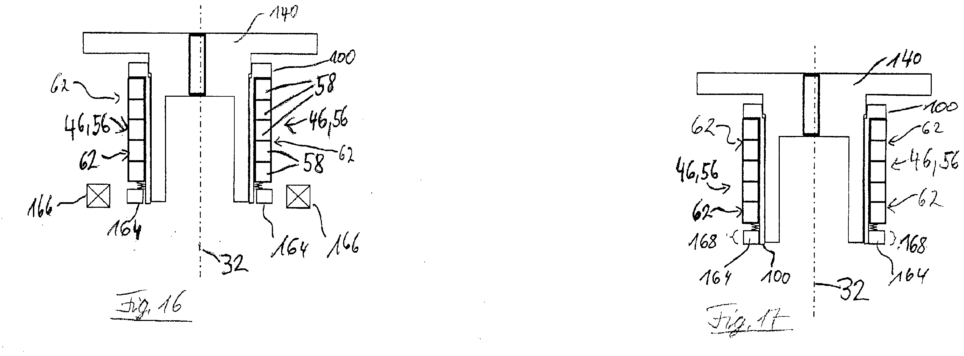

Die Fig. 9 zeigt die Ausgangslage, bei der der Rotor 14 bereits mit dem rotorseitigen Lagerteil 44, das von einem rotorseitigen Magnetringstapel 52 aus mehreren übereinander angeordneten permanentmagnetischen Rotormagnetringen 54 gebildet wird, bestückt ist. Der Rotor 14 ist allerdings noch nicht mit dem in den Fig. 16 bis 19 zumindest teilweise gezeigten Stator 140 verbaut, so dass der rotorseitige Lagerteil 44 bzw. die radial innenliegende, nicht vom Rotor 14 umgebene Seitenfläche 60 des rotorseitigen Lagerteils 40 über den Aufnahmeraum 142 für den Stator 140 zugänglich ist. Die Rotormagnetringe 54 können somit - bevor sie mit der Schutzwand 74 abgedeckt werden - zum Beispiel mittels eines mechanischen oder laserbasierten Bearbeitungsverfahrens, wie zum Beispiel ein Verfahren zum Materialabtragen durch Drehen, Fräsen, Bohren oder ein Laserablationsverfahren, bearbeitet werden, um sie zu korrigieren, zum Beispiel zur Verringerung einer Rotorunwucht.

Wie in Fig. 9 perspektivisch gezeigt ist, ist die Schutzwand 74 in Form eines Hohlzylinders bzw. als Hülse ausgebildet. Im Unterschied zu der vorstehend erwähnten Hülse 72 weist die Schutzwand 74 jedoch eine einheitliche Dicke auf. Allerdings kann die Schutzwand 74 jedoch auch - wie die Hülse 72 - jeweils an ihrem oberen und unteren axialen Ende einen verstärkten ringförmigen Kopplungsabschnitt aufweisen.

Wie in Fig. 9 die Pfeile 144 anzeigen, wird die Schutzwand 74 in den Aufnahmeraum 142 eingesetzt, so dass die Mittelachse der Schutzwand 74 im Wesentlichen mit der Rotationsachse 32 zusammenfällt. Die rotorseitige Schutzwand 74 wird vor der Seitenfläche 60 des rotorseitigen Lagerteils 44 angeordnet, wie Fig. 10 zeigt. Die Schutzwand 74 weist bevorzugt einen Außendurchmesser auf, der gegenüber dem Innendurchmesser der Seitenfläche 60 so dimensioniert ist, dass zwischen dem rotorseitigen Lagerteil 44 und der Schutzwand 74 ein leichtes Spiel vorhanden ist. Die Schutzwand 74 liegt somit zunächst nicht an der Seitenfläche 60 an, sondern ist davon beabstandet (vgl. Fig. 10).

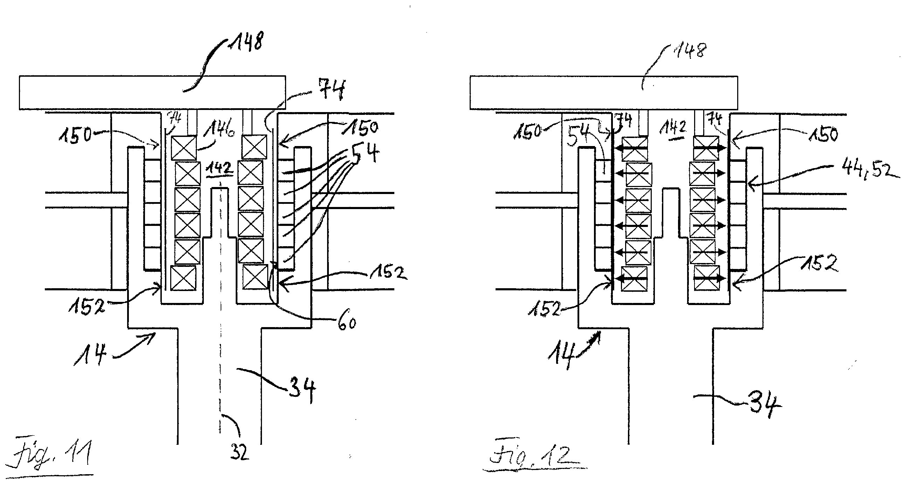

Wie Fig. 11 zeigt, wird sodann eine Spulenanordnung 146 einer magnetischen Pulsverformungs- und Kaltschweißvorrichtung 148 im Aufnahmeraum 142 derart angeordnet, dass sich die Spulenanordnung 146 radial innerhalb der Schutzwand 74 befindet. Die Spulenanordnung 146 überdeckt dabei im Wesentlichen die gesamte Innenfläche der Schutzwand 74, wobei die Spulenanordnung 146 einen leichten Abstand zu der Innenfläche aufweist. Die Spulenanordnung 146 wird mit einem kurzen elektrischen Strom beaufschlagt, wodurch außerhalb der Spulenanordnung 146 über einen Zeitraum von typischerweise etwa 10 bis 100 Mikrosekunden ein starkes Magnetfeld erzeugt wird, das über den ganzen Umfang der Seitenwand 74 radial nach außen gerichtete Kräfte auf die Seitenwand 74 bewirkt (vgl. die im Bereich der Spulenanordnung 146 eingezeichneten Pfeile in Fig. 12). Durch die radialen Kräfte wird die Schutzwand 74 über ihren gesamten Umfang gesehen mit einer hohen Geschwindigkeit nach radial außen bewegt. Dabei prallt die Schutzwand 74 gegen die Seitenfläche 60 bzw. gegen einen oberen Wandbereich 150 und einen unteren Wandbereich 152 des Rotors 14, wobei der obere bzw. untere Wandbereich 150, 152 des Rotors 14 in Bezug auf die Rotationsachse 32 gesehen oberhalb bzw. unterhalb der Seitenfläche 60 liegt.

Der die radial wirkenden Kräfte auf die Schutzwand 74 bewirkende magnetische Puls kann derart eingestellt sein, dass die Geschwindigkeit, mit der sich die Schutzwand 74 nach radial außen bewegt, so hoch ist, dass beim Aufprall der Seitenwand 74 auf den oberen bzw. unteren Wandbereich 150, 152 eine Kaltverschweißung bewirkt wird.

Der magnetische Puls kann ferner so eingestellt sein, dass die Schutzwand 74 auch in dem Bereich, der mit der Seitenfläche 60 in Kontakt gelangt, derart schnell auf die Seitenfläche 60 auftritt, dass sich auch dort eine Kaltverschweißung zwischen der Schutzwand 74 und der Seitenfläche 60 der Rotormagnetringe 54 ergibt. Alternativ kann der Magnetpuls so eingestellt sein, dass die Schutzwand 74 an der Seitenfläche 60 nur zur Anlage kommt, ohne dass eine Kaltverschweißung erfolgt und es somit lediglich zu einer plastischen Verformung kommt.

Die rotorseitige Schutzwand 74 wurde somit wenigstens mit dem oberen und unteren Wandbereich 150, 152 und damit mit dem Rotor 14 in einem umlaufenden Bereich oberhalb und unterhalb der Seitenfläche 60 gasdicht kaltverschweißt, so dass der rotorseitige Lagerteil 44 vom Rotor 14 und der Schutzwand 74 gasdicht gekapselt wird. Alternativ kann die gasdichte Kapselung auch zwischen der Schutzwand 74 und einem rotorseitigen rotationssymmetrischen Träger, ähnlich dem vorstehend beschriebenen Träger 70, für den rotorseitigen Lagerteil 44 ausgebildet sein. Die Schutzwand 74 kann dabei mit dem Träger kaltverschweißt sein (nicht gezeigt).

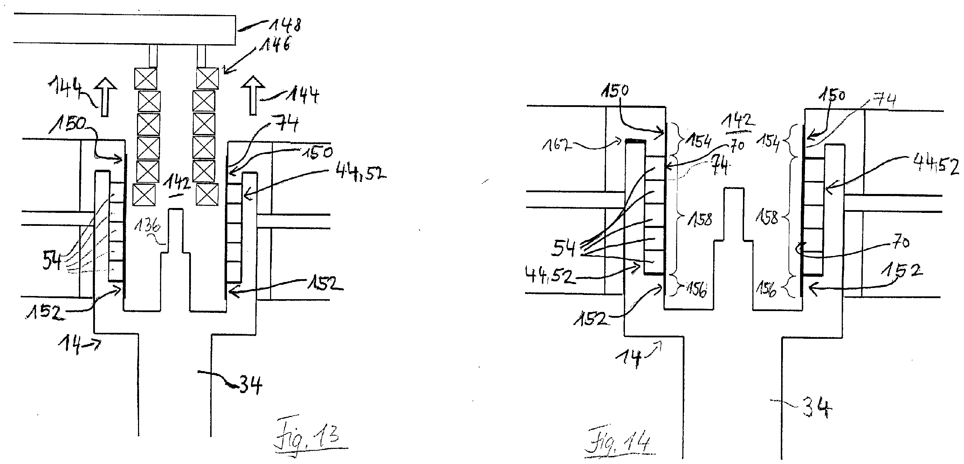

Nach dem Kaltverschweißen wird die Spulenanordnung 146 aus dem Aufnahmeraum 142 entfernt, wie die Pfeile 144 in Fig. 13 anzeigen.

Fig. 14 gibt den Endzustand einer mit dem Rotor 14 gasdicht verschweißten rotorseitigen Schutzwand 74 und dem somit gasdicht gekapselten rotorseitigen Lagerteil 44 wieder. Dabei wurde ein oberer Endabschnitt 154 der Schutzwand 74 mit einem oberen Wandbereich 150 des Rotors gasdicht kaltverschweißt. Außerdem wurde ein unterer Endabschnitt 156 der Schutzwand mit dem unteren Wandbereich 152 des Rotors 14 gasdicht kaltverschweißt, wodurch das rotorseitige Lagerteil 44 gasdicht gekapselt ist. Außerdem liegt ein mittlerer Abschnitt 158 der Schutzwand 74 an der Seitenfläche 70 des rotorseitigen Lagerteils 44 an und/oder der mittlere Abschnitt 158 wurde mit der Seitenfläche 70 kaltverschweißt.

Bei Notwendigkeit kann auf der kreisringförmigen Endfläche des Rotors 14 eine von einem Dichtring 162 gebildete Dichtung vorgesehen werden (vgl. Fig. 14).

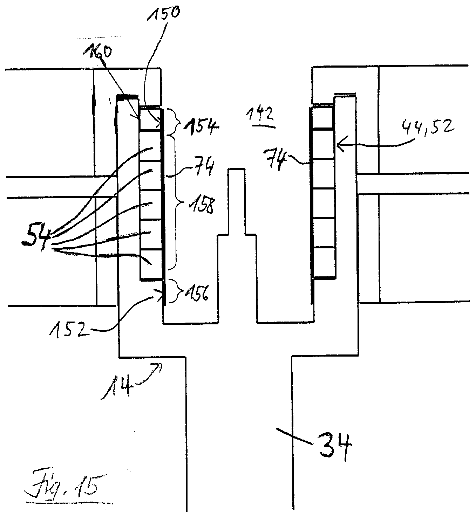

Fig. 15 zeigt eine Abwandlung gegenüber den Fig. 9 bis 14. Wie in Fig. 15 gesehen werden kann, wurde der obere Endabschnitt 154 der Schutzwand 74 mit einem oberen Wandbereich 150 eines Metallrings 160, zum Beispiel aus Edelstahl oder Aluminium, kaltverschweißt. Dabei wurde der Metallring 160, der gleich dimensioniert ist wie ein rotorseitiger Magnetring 54, oberhalb des Magnetringstapels 52 angeordnet und mit dem Rotor 14 gasdicht verbunden, insbesondere ebenfalls durch Kaltverschweißen.

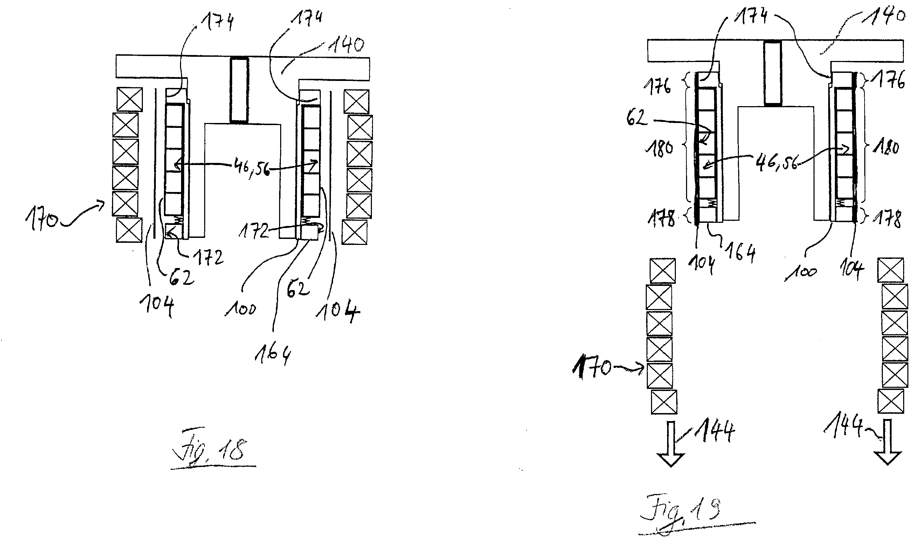

Mit Bezug auf die Fig. 16 bis 19 wird nun erläutert, wie eine hülsenförmige statorseitige Schutzwand 104 (vgl. Fig. 18 und 19) zur gasdichten Kapselung eines statorseitigen Lagerteils 46 mit dem Stator 140 kaltverschweißt werden kann. Wie Fig. 16 zeigt, ist der Stator 140 zunächst noch nicht in die Vakuumpumpe 10 eingebaut und mit dem Rotor 14 gekoppelt. Das statorseitige Lagerteil 46 wird von dem zumindest näherungsweise rotationssymmetrischen Träger 100 getragen, der am Stator 140 befestigt ist und somit einen Teil des Stators 140 bildet.

Bevor die Schutzwand 104 angebracht wird, wird - wie die Fig. 16 und 17 zeigen - ein Metallring 164, zum Beispiel aus Edelstahl oder Aluminium, unterhalb des statorseitigen Magnetringstapels 56 auf den Stator 140 aufgesteckt. Anschließend wird eine um den Metallring 164 in Umfangsrichtung umlaufende Spule 166 einer magnetischen Pulsverformungs- und Kaltschweißvorrichtung um den Metallring 164 herum angeordnet. Die Spule 166 wird mit einem sehr hohen Stromimpuls beaufschlagt, wodurch ein Magnetpuls mit einer Dauer von typischerweise etwa 10 bis 100 Mikrosekunden erzeugt wird, der nach radial innen wirkende Kräfte auf den Metallring 164 bewirkt, durch die der Metallring 164 mit einer großen Geschwindigkeit nach radial innen bewegt wird. Dabei prallt der Metallring 164 gegen den Träger 100 und wird mit diesem kaltverschweißt. Der Bereich zwischen dem Metallring 164 und dem Träger 100 wird somit gasdicht verschlossen.

Wie die Fig. 18 zeigt, wird sodann die in Form eines Hohlzylinders bzw. einer Hülse ausgebildete Schutzwand 104 auf den Stator 140 aufgesteckt, so dass die Schutzwand 104 den statorseitigen Lagerteil 46 umgibt und vor der Seitenfläche 62 des statorseitigen Lagerteils 46 liegt. Der Innendurchmesser der Schutzwand 104 weist gegenüber dem Außendurchmesser des statorseitigen Lagerteils 46 ein Übermaß auf, so dass zwischen der Schutzwand 104 und dem statorseitigen Lagerteil 46 ein Spiel besteht. Die Schutzwand 104 ist somit von der Seitenfläche 62 wenigstens geringfügig beabstandet.

Anschließend wird eine Spule 170 einer magnetischen Pulsverformungs- und Kaltschweißvorrichtung um die Schutzwand 104 herum angeordnet. Die Spule 170 wird mit einem sehr hohen Stromimpuls beaufschlagt, wodurch ein Magnetpuls mit einer Zeitdauer von typischerweise etwa 10 bis 100 Mikrosekunden erzeugt wird, der nach radial innen gerichtete Kräfte auf die Schutzwand 140 bewirkt, wodurch die Schutzwand 140 mit einer sehr hohen Geschwindigkeit nach radial innen gedrückt wird und dabei gegen die Seitenfläche 62 bzw. die äußere Wand 172 des Metallrings 164 bzw. eine äußere Wand 174 des Trägers 100 prallt. Ein oberer Endabschnitt 176 der Schutzwand 104 wird dabei mit der äußeren Wand 174 kaltverschweißt. In der entsprechenden Weise wird ein unterer Endabschnitt 178 der Schutzwand 104 mit der äußeren Wand 172 des Metallrings 164 kaltverschweißt (vgl. Fig. 19). Je nach Einstellung des Magnetpulses wird ein mittlerer Abschnitt 180 der Schutzwand 104 mit der Seitenfläche 62 des statorseitigen Lagerteils 46 kaltverschweißt oder der mittlere Abschnitt 180 kommt nur zur Anlage an der Seitenfläche 62, insbesondere in Art einer Verkrimpung, ohne dass eine Kaltverschweißung bewirkt wird. Im Ergebnis wird der statorseitige Lagerteil 46 vom Träger 100, dem Metallring 164 und der statorseitigen Schutzwand 104 gasdicht eingekapselt und somit vor Korrosion und Versprödung, insbesondere durch Wasserstoff, geschützt. Wie in Fig. 19 die Pfeile 144 anzeigen, wird die Spule 170 nach dem Pulsverformungs- und Kaltschweißvorgang entfernt. Der Stator 140 mit dem eingekapselten statorseitigen Lagerteil 46 kann dann mit dem Rotor 14 zusammengesetzt werden.

Zusammengefasst wurde somit mit Bezug auf die Fig. 9 bis 19 ein Verfahren beschrieben, bei dem eine rotorseitige Schutzwand 74 mit dem Rotor 14 und eine statorseitige Schutzwand 104 mit dem Stator 140 kaltverschweißt wurde. Dadurch wurde jeweils eine gasdichte Kapselung für das rotorseitige Lagerteil 44 und das statorseitige Lagerteil 46 hergestellt, um das jeweilige Lagerteil 44, 46 vor Korrosion und Versprödung zu schützen. Die Kaltverschweißung kann dabei, wie beschrieben, über eine magnetische Pulsumformung der jeweiligen Schutzwand 74, 104 erreicht werden. Dabei hat sich überraschenderweise gezeigt, dass die jeweilige Schutzwand 74, 104 über ihren Umfang gesehen nach radial außen oder innen mit einer großen Geschwindigkeit bewegt werden, ohne dass die Schutzwand 74, 104 etwa durch Risse oder dergleichen beschädigt wird.

Alternativ zu den Kaltverschweißungen kann die jeweilige Schutzwand 74, 104 mit dem Rotor 14 bzw. Stator 140 laserstrahlverschweißt oder elektronenstrahlverschweißt werden. Der Rotor 14 und der Stator 140 können ferner zu einer der Fig. 1 entsprechenden Vakuumpumpe zusammengebaut werden.

Die rotorseitige und/oder statorseitige Schutzwand 74, 104 weist bevorzugt eine Dicke von etwa 50 µm auf. Vorzugsweise ist die jeweilige Schutzwand 74, 104 aus Aluminium, Edelstahl, insbesondere nicht-magnetischem Edelstahl, Gold, Silber, Wolfram, Kupfer, Platin oder Nickel ausgebildet. Außerdem kann die jeweilige Schutzwand 74, 104 eine Beschichtung aufweisen, die ein korrosionshemmendes und/oder vor Versprödung schützendes Material aufweist.

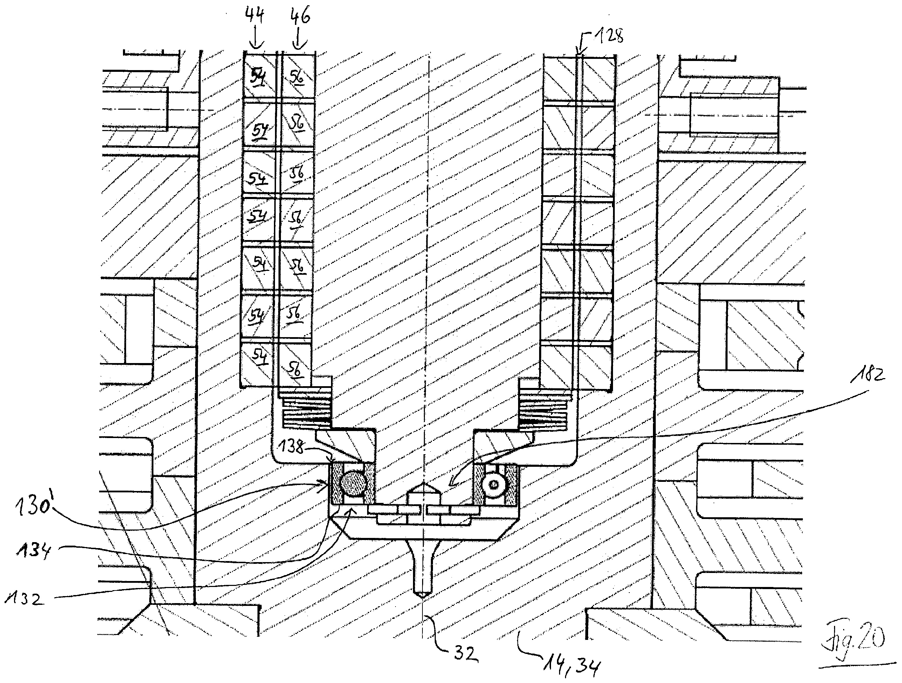

Die Vakuumpumpe der Fig. 20 weist im Unterschied zur Vakuumpumpe der Fig. 1 und 2 ein Fanglager 130' auf, das in axialer Richtung gesehen außerhalb des rotorseitigen Lagerteils 44 und des statorseitigen Lagerteils 46 angeordnet ist. Das Fanglager 130' befindet sich somit nicht innerhalb der Lagerteile 44, 46 sondern es befindet sich längs der Rotationsachse 32 gesehen unterhalb der Lagerteile 44, 46, wie Fig. 20 zeigt. Ein rotorseitiger Zapfenabschnitt 136 (vgl. Fig. 13), der in den Innenbereich der beiden Lagerteile 44, 46 hineinragt, wird nicht benötigt. Die Magnetringe 54 des rotorseitigen Lagerteils 44 können daher einfacher angebracht und die rotorseitige Schutzwand (in Fig. 20 nicht gezeigt) kann zur Kapselung der Magnetringe einfacher mit dem Rotor 14 verschweißt werden.

Das Fanglager 130' umfasst ein als Kugellager ausgebildetes Wälzlager 132, das an seiner radialen Außenseite eine als Anschlag dienende Fanghülse 134 aufweist. Das Wälzlager 132 ist an einem, insbesondere verjüngten, Endabschnitt 182 des Magnetlagerstators angeordnet. Zwischen der Fanghülse 134 und dem Rotor 14 ist im Ruhezustand bzw. bei gleichlaufendem Betrieb der Vakuumpumpe der ringförmige freie Spalt 138 ausgebildet, so dass sich die Fanghülse 134 und der Rotor 14 nicht berühren und der Rotor 14 außer Eingriff mit dem Kugellager 132 steht. Erst bei einer radialen Auslenkung des Rotors 14 berühren sich die Fanghülse 134 und der Rotor 14, so dass der Rotor 14 mit dem Kugellager 132 in Eingriff gelangt und das Kugellager 132 mit der Fanghülse 134 einen radialen Anschlag für den Rotor 14 bildet, der zum Beispiel eine Kollision der rotorseitigen und statorseitigen Schutzwände (in Fig. 20 nicht gezeigt) verhindert. Der Spalt 138 kann dazu eine geringere radiale Spaltbreite aufweisen als der Luftspalt 128.

Da der durch das Kugellager 132 gebildete Anschlag eine drehende Relativbewegung des Rotors 14 gegenüber dem Stator zulässt, wird eine abrupte Abbremsung des Rotors 14 bei dem Eingreifen des Fanglagers 130 vermieden. Das Kugellager 132 ist als nicht geschmiertes Kugellager 132 ausgebildet, so dass eine Verschmutzung des durch die Pumpe 10 erzeugten Vakuums ausgeschlossen ist.

### Bezugszeichenliste

- 10: Vakuumpumpe
- 12: Gehäuse
- 14: Rotor
- 16: Saugflansch
- 18: Pumpeneinlass
- 20: Vorvakuumflansch
- 22: Pumpenauslass
- 24: Rotationseinheit
- 26: Unterteil
- 28: Statorscheibe
- 30: Distanzelement
- 32: Rotationsachse
- 34: Rotorwelle
- 36: Rotorscheibe
- 38: Antriebseinheit
- 40: vorvakuumseitiges Lager
- 42: Permanentmagnetlager
- 44: rotorseitiger Lagerteil
- 46: statorseitiger Lagerteil
- 48: Aufhängung
- 50: Strebe
- 52: rotorseitiger Magnetringstapel
- 54: Rotormagnetring
- 56: statorseitiger Magnetringstapel
- 58: Statormagnetring
- 60: radiale Innenfläche
- 62: radiale Außenfläche
- 64: magnetischer Spalt
- 66: gasdichte Kapselung für den rotorseitigen Lagerteil
- 68: gasdichte Kapselung für den statorseitigen Lagerteil
- 70: Träger
- 72: Hülse
- 74: Schutzwand
- 76: radiale Außenfläche
- 78: radiale Innenfläche
- 80: Schulterabschnitt
- 82: Deckfläche
- 84: Abschlussring
- 86: Deckfläche
- 88, 90: Kopplungsabschnitt
- 92, 94: Kopplungsabschnitt
- 96, 98: Dichtungselement
- 100: Träger
- 102: Hülse
- 104: Schutzwand
- 106: radiale Außenfläche
- 108: radiale Innenfläche
- 110: Schulterabschnitt
- 112: Deckfläche
- 114, 116: Kopplungsabschnitt
- 118: Deckfläche
- 120, 122: Kopplungsabschnitt
- 124: Innengewinde
- 126, 127: Dichtungselement
- 128: Luftspalt
- 130, 130': Fanglager
- 132: Wälzlager
- 134: Fanghülse
- 136: Zapfenabschnitt
- 138: Spalt
- 140: Stator
- 142: Aufnahmeraum
- 144: Pfeil
- 146: Spulenanordnung
- 148: magnetische Pulsverformungs- und Kaltschweißvorrichtung
- 150: oberer Wandbereich
- 152: unterer Wandbereich
- 154: oberer Endabschnitt
- 156: unterer Endabschnitt
- 158: mittlerer Abschnitt
- 160: Metallring
- 162: Dichtring
- 164: Metallring
- 166: Spule
- 168: unterer Bereich
- 170: Spule
- 172: äußere Wand
- 174: äußere Wand
- 176: oberer Endabschnitt
- 178: unterer Endabschnitt
- 180: mittlerer Abschnitt
- 182: Endabschnitt
- b₁, b₂: Spaltbreite
- D₁, D₂, D₃, D₄: Wandstärke

## Patentansprüche

1. Vakuumpumpe (10), insbesondere Turbomolekularpumpe, oder Rotationseinheit (24) für eine Vakuumpumpe, insbesondere für eine Turbomolekularpumpe, mit einem Rotor (14), einem Stator und einem Magnetlager (42), wobei das Magnetlager (42) einen am Rotor (14) angeordneten rotorseitigen Lagerteil (44) und einen am Stator angeordneten statorseitigen Lagerteil (46) aufweist, wobei der rotorseitige Lagerteil (44) und der statorseitige Lagerteil (46) einander gegenüberliegende Seitenflächen (60, 62) aufweisen, wobei eine gasdichte Kapselung (66) für den rotorseitigen Lagerteil (44) vorgesehen ist, die eine rotorseitige Schutzwand (74) umfasst, die die Seitenfläche (60) des rotorseitigen Lagerteils (44) abdeckt und/oder wobei eine gasdichte Kapselung (68) für den statorseitigen Lagerteil (46) vorgesehen ist, die eine statorseitige Schutzwand (104) umfasst, die die Seitenfläche (62) des statorseitigen Lagerteils (46) abdeckt,
wobei die rotorseitige Schutzwand (74) mit dem Rotor (14) gasdicht verschweißt ist, und/oder wobei die statorseitige Schutzwand (104) mit dem Stator (140) gasdicht verschweißt ist,
**dadurch gekennzeichnet, dass**
die rotorseitige und/oder statorseitige Schutzwand (74, 104) eine Dicke von maximal 300 Mikrometern aufweist, dass die rotorseitige Schutzwand (74) mittels magnetischer Pulsverformung mit dem Rotor (14) kaltverschweißt ist und/oder dass die statorseitige Schutzwand (104) mittels magnetischer Pulsverformung mit dem Stator (140) kaltverschweißt ist.

2. Vorrichtung nach Anspruch 1,
**dadurch gekennzeichnet, dass**
die rotorseitige und/oder statorseitige Schutzwand (74, 104) als Hohlzylinder ausgebildet ist, wobei, bevorzugt, der die jeweilige Schutzwand (74, 104) bildende Hohlzylinder koaxial zum rotorseitigen Lagerteil (44) bzw. zum statorseitigen Lagerteil (46) angeordnet ist.

3. Vorrichtung nach einem der vorstehenden Ansprüche,
**dadurch gekennzeichnet, dass**
die Schutzwand (74, 104) aus Aluminium, Edelstahl, insbesondere nicht-magnetischem Edelstahl, Gold, Silber, Wolfram, Kupfer, Platin oder Nickel besteht oder zumindest einen der genannten Stoffe aufweist.

4. Vorrichtung nach einem der vorstehenden Ansprüche,
**dadurch gekennzeichnet, dass**
die Schutzwand (74, 104) eine Dicke von maximal 150 Mikrometern, bevorzugt von maximal 100 Mikrometern, weiter bevorzugt von maximal 75 Mikrometern, noch weiter bevorzugt von maximal 50 Mikrometern und noch weiter bevorzugt von maximal 40 Mikrometern aufweist.

5. Vorrichtung nach einem der vorstehenden Ansprüche,
**dadurch gekennzeichnet, dass**
die Schutzwand (74, 104) eine Beschichtung, insbesondere aus Oxidkeramik, aufweist, wobei, bevorzugt, die Beschichtung ein korrosionshemmendes und/oder vor Versprödung schützendes Material, insbesondere Nickel, aufweist.

6. Vorrichtung nach einem der Ansprüche 1 bis 5,
**dadurch gekennzeichnet, dass**
diese ein Fanglager (130') aufweist, das eine radiale Bewegung des Stators und des Rotors (14) relativ zueinander begrenzt, und
dass in axialer Richtung der Vakuumpumpe (10) oder Rotationseinheit (24) gesehen das Fanglager (130') außerhalb des rotorseitigen Lagerteils (44) und des statorseitigen Lagerteils (46) angeordnet ist.

7. Verfahren zur Herstellung einer Vakuumpumpe (10), insbesondere einer Turbomolekularpumpe, oder einer Rotationseinheit (24) für eine Vakuumpumpe, insbesondere für eine Turbomolekularpumpe, mit einem Rotor (14), einem Stator und einem Magnetlager (42), wobei das Magnetlager (42) einen am Rotor (14) angeordneten rotorseitigen Lagerteil (44) und einen am Stator angeordneten statorseitigen Lagerteil (46) aufweist, wobei in zusammengebautem Zustand der Vakuumpumpe (10) bzw. der Rotationseinheit (24) der rotorseitige Lagerteil (44) und der statorseitige Lagerteil (46) einander gegenüberliegende Seitenflächen (60, 62) aufweisen, wobei eine gasdichte Kapselung (66) für das rotorseitige Lagerteil (44) vorgesehen wird, die eine, insbesondere als Hohlzylinder ausgebildete, rotorseitige Schutzwand (74) umfasst, die die Seitenfläche des rotorseitigen Lagerteils (44) abdeckt und/oder wobei eine gasdichte Kapselung (68) für den statorseitigen Lagerteil (46) vorgesehen wird, die eine, insbesondere als Hohlzylinder ausgebildete, statorseitige Schutzwand (104) umfasst, die die Seitenfläche (62) des statorseitigen Lagerteils (46) abdeckt, wobei die rotorseitige Schutzwand (74) mit dem Rotor (14) verschweißt wird, und/oder wobei die statorseitige Schutzwand (104) mit dem Stator (140) verschweißt wird,
**dadurch gekennzeichnet, dass**
die rotorseitige und/oder statorseitige Schutzwand (74, 104) eine Dicke von maximal 300 Mikrometern aufweist, dass die rotorseitige Schutzwand (74) vor der Seitenfläche (60) des rotorseitigen Lagerteils (44) angeordnet und dann mittels magnetischer Pulsverformung mit dem Rotor (14) kaltverschweißt wird, und/oder
die statorseitige Schutzwand (104) vor der Seitenfläche (62) des statorseitigen Lagerteils (46) angeordnet und mittels magnetischer Pulsverformung mit dem Stator (140) kaltverschweißt wird.

8. Verfahren nach Anspruch 7,
**dadurch gekennzeichnet, dass**
die rotorseitige Schutzwand (74) mit dem Rotor (14) und/oder die statorseitige Schutzwand (104) mit dem Stator (140) verschweißt werden bevor der Rotor (14) und der Stator (140) zusammengesetzt werden.

9. Verfahren nach Anspruch 7 oder 8,
**dadurch gekennzeichnet, dass**
die rotorseitige Schutzwand (74) mit wenigstens einem oberhalb oder unterhalb des rotorseitigen Lagerteils (44) vorgesehenen Metallring (160), insbesondere aus Aluminium oder Edelstahl, mittels magnetischer Pulsverformung kaltverschweißt wird.

10. Verfahren nach Anspruch 9,
**dadurch gekennzeichnet, dass**
der Metallring (160) vor dem Kaltverschweißen mit der rotorseitigen Schutzwand (74) mit dem Rotor (14) verbunden wird, insbesondere durch Kaltverschweißen mittels magnetischer Pulsverformung.

11. Verfahren nach einem der Ansprüche 7 bis 10,
**dadurch gekennzeichnet, dass**
die statorseitige Schutzwand (104) mit wenigstens einem oberhalb oder unterhalb des statorseitigen Lagerteils (46) vorgesehenen Metallring (164), insbesondere aus Aluminium oder Edelstahl, mittels magnetischer Pulsverformung kaltverschweißt wird.

12. Verfahren nach Anspruch 11,
**dadurch gekennzeichnet, dass**
der Metallring (164) vor dem Kaltverschweißen mit der statorseitige Schutzwand (104) mit dem Stator (140) verbunden wird, insbesondere durch Kaltverschweißen mittels magnetischer Pulsverformung.

## Claims

1. A vacuum pump (10), in particular a turbomolecular pump, or a rotation unit (24) for a vacuum pump, in particular for a turbomolecular pump, comprising a rotor (14), a stator and a magnetic bearing (42), wherein the magnetic bearing (42) has a rotor-side bearing part (44) arranged at the rotor (14) and a stator-side bearing part (46) arranged at the stator; wherein the rotor-side bearing part (44) and the stator-side bearing part (46) have mutually oppositely disposed side surfaces (60, 62); wherein a gastight encapsulation (66) is provided for the rotor-side bearing part (44) and comprises a rotor-side protective wall (74) which covers the side surface (60) of the rotor-side bearing part (44); and/or wherein a gastight encapsulation (68) is provided for the stator-side bearing part (46) and comprises a stator-side protective wall (104) which covers the side surface (62) of the stator-side bearing part (46);
wherein the rotor-side protective wall (74) is welded to the rotor (14) in a gastight manner; and/or wherein the stator-side protective wall (104) is welded to the stator (140) in a gastight manner,
**characterized in that**
the rotor-side protective wall and/or the stator-side protective wall (74, 104) has/have a thickness of at most 300 micrometers; **in that** the rotor-side protective wall (74) is cold welded to the rotor (14) by means of magnetic pulse deformation; and/or **in that** the stator-side protective wall (104) is cold welded to the stator (140) by means of magnetic pulse deformation.

2. An apparatus in accordance with claim 1,
**characterized in that**
the rotor-side protective wall and/or the stator-side protective wall (74, 104) is/are configured as a hollow cylinder, with, preferably, the hollow cylinder forming the respective protective wall (74, 104) being arranged coaxially to the rotor-side bearing part (44) or to the stator-side bearing part (46).

3. An apparatus in accordance with one of the preceding claims,
**characterized in that**
the protective wall (74, 104) comprises aluminum, stainless steel, in particular non-magnetic stainless steel, gold, silver, tungsten, copper, platinum or nickel or has at least one of said materials.

4. An apparatus in accordance with any one of the preceding claims,
**characterized in that**
the protective wall (74, 104) has a thickness of at most 150 micrometers, preferably of at most 100 micrometers, further preferably of at most 75 micrometers, even further preferably of at most 50 micrometers, and even further preferably of at most 40 micrometers.

5. An apparatus in accordance with any one of the preceding claims,
**characterized in that**
the protective wall (74, 104) has a coating, in particular comprising oxide ceramics, with, preferably, the coating having a material, in particular nickel, which inhibits corrosion and/or protects against embrittlement.

6. An apparatus in accordance with any one of the claims 1 to 5,
**characterized in that**
it has a safety bearing (130') which bounds a radial movement of the stator and of the rotor (14) relative to one another; and
**in that** the safety bearing (130') is arranged outside the rotor-side bearing part (44) and the stator-side bearing part (46), viewed in an axial direction of the vacuum pump (10) or of the rotation unit (24).

7. A method of manufacturing a vacuum pump (10), in particular a turbomolecular pump, or a rotation unit (24) for a vacuum pump, in particular for a turbomolecular pump, comprising a rotor (14), a stator and a magnetic bearing (42), wherein the magnetic bearing (42) has a rotor-side bearing part (44) arranged at the rotor (14) and a stator-side bearing part (46) arranged at the stator; wherein the rotor-side bearing part (44) and the stator-side bearing part (46) have mutually oppositely disposed side surfaces (60, 62) in an assembled state of the vacuum pump (10) or of the rotation unit (24); wherein a gastight encapsulation (66) is provided for the rotor-side bearing part (44) and comprises a rotor-side protective wall (74) which is in particular configured as a hollow cylinder and which covers the side surface of the rotor-side bearing part (44); and/or wherein a gastight encapsulation (68) is provided for the stator-side bearing part (46) and comprises a stator-side protective wall (104) which is in particular configured as a hollow cylinder and which covers the side surface (62) of the stator-side bearing part (46); wherein the rotor-side protective wall (74) is welded to the rotor (14); and/or wherein the stator-side protective wall (104) is welded to the stator (140),
**characterized in that**
the rotor-side protective wall and/or the stator-side protective wall (74, 104) has/have a thickness of at most 300 micrometers; **in that** the rotor-side protective wall (74) is arranged in front of the side surface (60) of the rotor-side bearing part (44) and is cold welded to the rotor (14) by means of magnetic pulse deformation; and/or
**in that** the stator-side protective wall (104) is arranged in front of the side surface (62) of the stator-side bearing part (46) and is cold welded to the stator (140) by means of magnetic pulse deformation.

8. A method in accordance with claim 7,
**characterized in that**
the rotor-side protective wall (74) is welded to the rotor (14) and/or the stator-side protective wall (104) is welded to the stator (140) before the rotor (14) and the stator (140) are assembled.

9. A method in accordance with claim 7 or claim 8,
**characterized in that**
the rotor-side protective wall (74) is cold welded to at least one metal ring (160) by means of magnetic pulse deformation, said metal ring being provided above or beneath the rotor-side bearing part (44) and in particular comprising aluminum or stainless steel.

10. A method in accordance with claim 9,
**characterized in that**
the metal ring (160) is connected to the rotor (14), in particular by cold welding by means of magnetic pulse deformation, before the cold welding to the rotor-side protective wall (74).

11. A method in accordance with any one of the claims 7 to 10,
**characterized in that**
the stator-side protective wall (104) is cold welded to at least one metal ring (164) by means of magnetic pulse deformation, said metal ring being provided above or beneath the stator-side bearing part (46) and in particular comprising aluminum or stainless steel.

12. A method in accordance with claim 11,
**characterized in that**
the metal ring (164) is connected to the stator (140), in particular by cold welding by means of magnetic pulse deformation, before the cold welding to the stator-side protective wall (104).

## Revendications

1. Pompe à vide (10), en particulier pompe turbomoléculaire, ou unité de rotation (24) pour une pompe à vide, en particulier pour une pompe turbomoléculaire, comportant un rotor (14), un stator et un palier magnétique (42), dans laquelle
le palier magnétique (42) comprend une partie de palier (44) côté rotor agencée sur le rotor (14) et une partie de palier (46) côté stator agencée sur le stator,
la partie de palier (44) côté rotor et la partie de palier (46) côté stator présentent des surfaces latérales (60, 62) opposées l'une à l'autre,
un encapsulage (66) étanche aux gaz est prévu pour la partie de palier (44) côté rotor, qui comprend une paroi de protection (74) côté rotor qui recouvre la surface latérale (60) de la partie de palier (44) côté rotor, et/ou un encapsulage (68) étanche aux gaz est prévu pour la partie de palier (46) côté stator, qui comprend une paroi de protection (104) côté stator qui recouvre la surface latérale (62) de la partie de palier (46) côté stator,
la paroi de protection (74) côté rotor est assemblée par soudage étanche aux gaz au rotor (14), et/ou
la paroi de protection (104) côté stator est assemblée par soudage étanche aux gaz au stator (140),
**caractérisée en ce que**
la paroi de protection (74, 104) côté rotor et/ou côté stator présente une épaisseur au maximum de 300 micromètres, **en ce que** la paroi de protection (74) côté rotor est assemblée par soudage à froid au rotor (14) au moyen d'une déformation d'impulsion magnétique, et/ou **en ce que**
la paroi de protection (104) côté stator est assemblée par soudage à froid au stator (140) au moyen d'une déformation d'impulsion magnétique.

2. Dispositif selon la revendication 1,
**caractérisé en ce que**
la paroi de protection (74, 104) côté rotor et/ou côté stator est réalisée sous forme de cylindre creux et, de préférence, le cylindre creux formant la paroi de protection (74, 104) respective est agencé coaxialement à la partie de palier (44) côté rotor ou à la partie de palier (46) côté stator.

3. Dispositif selon l'une des revendications précédentes,
**caractérisé en ce que**
la paroi de protection (74, 104) est constituée en aluminium, acier inoxydable, en particulier en acier inoxydable non-magnétique, en or, argent, tungstène, cuivre, platine ou nickel, ou comprend au moins l'une desdites matières.

4. Dispositif selon l'une des revendications précédentes,
**caractérisé en ce que**
la paroi de protection (74, 104) présente une épaisseur au maximum de 150 micromètres, de préférence au maximum de 100 micromètres, de manière préférée au maximum de 75 micromètres, de manière encore plus préférée au maximum de 50 micromètres et de manière encore plus préférée au maximum de 40 micromètres.

5. Dispositif selon l'une des revendications précédentes,
**caractérisé en ce que**
la paroi de protection (74, 104) présente un revêtement, en particulier en céramique d'oxyde, et, de préférence, le revêtement présente un matériau d'inhibition de corrosion et/ou de protection contre la fragilisation, en particulier du nickel.

6. Dispositif selon l'une des revendications 1 à 5,
**caractérisé en ce que**
celui-ci comprend un palier d'arrêt (130') qui limite un mouvement radial du stator et du rotor (14) l'un par rapport à l'autre, et **en ce que** vu en direction axiale de la pompe à vide (10) ou de l'unité de rotation (24), le palier d'arrêt (130') est agencé à l'extérieur de la partie de palier (44) côté rotor et de la partie de palier (46) côté stator.

7. Procédé de réalisation d'une pompe à vide (10), en particulier d'une pompe turbomoléculaire, ou d'une unité de rotation (24) pour une pompe à vide, en particulier pour une pompe turbomoléculaire, comportant un rotor (14), un stator et un palier magnétique (42),
dans lequel
le palier magnétique (42) comprend une partie de palier (44) côté rotor agencée sur le rotor (14) et une partie de palier (46) côté stator agencée sur le stator,
dans l'état assemblé de la pompe à vide (10) ou de l'unité de rotation (24), la partie de palier (44) côté rotor et la partie de palier (46) côté stator présentent des surfaces latérales (60, 62) opposées l'une à l'autre,
un encapsulage (66) étanche aux gaz est prévu pour la partie de palier (44) côté rotor, qui comprend une paroi de protection (74) côté rotor réalisée en particulier sous forme de cylindre creux, qui recouvre la surface latérale de la partie de palier (44) côté rotor, et/ou
un encapsulage (68) étanche aux gaz est prévu pour la partie de palier (46) côté stator, qui comprend une paroi de protection (104) côté stator, réalisée en particulier sous forme de cylindre creux, qui recouvre la surface latérale (62) de la partie de palier (46) côté stator,
la paroi de protection (74) côté rotor est assemblée par soudage au rotor (14), et/ou
la paroi de protection (104) côté stator est assemblée par soudage au stator (140),
**caractérisé en ce que**
la paroi de protection (74, 104) côté rotor et/ou côté stator présente une épaisseur au maximum de 300 micromètres, **en ce que** la paroi de protection (74) côté rotor est agencée en avant de la surface latérale (60) de la partie de palier (44) côté rotor et est alors assemblée par soudage à froid au rotor (14) au moyen d'une déformation d'impulsion magnétique, et/ou **en ce que**
la paroi de protection (104) côté stator est agencée en avant de la surface latérale (62) de la partie de palier (46) côté stator et est assemblée par soudage à froid au stator (140) au moyen d'une déformation d'impulsion magnétique.

8. Procédé selon la revendication 7,
**caractérisé en ce que**
la paroi de protection (74) côté rotor est assemblée par soudage au rotor (14) et/ou la paroi de protection (104) côté stator est assemblée par soudage au stator (140) avant d'assembler le rotor (14) et le stator (140).

9. Procédé selon la revendication 7 ou 8,
**caractérisé en ce que**
la paroi de protection (74) côté rotor est assemblée par soudage à froid à au moins un anneau (160) en métal, en particulier en aluminium ou en acier inoxydable, prévu au-dessus ou au-dessous de la partie de palier (44) côté rotor, au moyen d'une déformation d'impulsion magnétique.

10. Procédé selon la revendication 9,
**caractérisé en ce que**
avant d'assembler l'anneau en métal (160) par soudage à froid à la paroi de protection (74) côté rotor, il est relié au rotor (14), en particulier par soudage à froid au moyen d'une déformation d'impulsion magnétique.

11. Procédé selon l'une des revendications 7 à 10,
**caractérisé en ce que**
la paroi de protection (104) côté stator est assemblée par soudage à froid à au moins un anneau (164) en métal, en particulier en aluminium ou en acier inoxydable, prévu au-dessus ou au-dessous de la partie de palier (46) côté stator, au moyen d'une déformation d'impulsion magnétique.

12. Procédé selon la revendication 11,
**caractérisé en ce que**
avant d'assembler l'anneau en métal (164) par soudage à froid à la paroi de protection (104) côté stator, il est relié au stator (140), en particulier par soudage à froid au moyen d'une déformation d'impulsion magnétique.
